(19) **Europäisches Patentamt / European Patent Office / Office européen des brevets**

(11) **EP 4 509 533 A1**

(12) # EUROPEAN PATENT APPLICATION
published in accordance with Art. 153(4) EPC

(43) Date of publication:
**19.02.2025 Bulletin 2025/08**

(21) Application number: **23788294.9**

(22) Date of filing: **10.04.2023**

(51) International Patent Classification (IPC):
*C08F 8/04* (2006.01)        *C08F 12/08* (2006.01)

(52) Cooperative Patent Classification (CPC):
**C08F 8/04; C08F 12/08**

(86) International application number:
**PCT/JP2023/014477**

(87) International publication number:
**WO 2023/199876 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.04.2022 JP 2022065175**

(71) Applicant: **MITSUBISHI GAS CHEMICAL
COMPANY, INC.**
**Chiyoda-ku**
**Tokyo 100-8324 (JP)**

(72) Inventors:
• **SATO Hideyuki**
**Niigata-shi, Niigata 950-3112 (JP)**
• **ARAI Hirokatsu**
**Niigata-shi, Niigata 950-3112 (JP)**
• **NAKAMURA Yusuke**
**Niigata-shi, Niigata 950-3112 (JP)**
• **MATSUSHITA Miru**
**Niigata-shi, Niigata 950-3112 (JP)**
• **KATO Noriyuki**
**Tokyo 100-8324 (JP)**

(74) Representative: **Vossius & Partner
Patentanwälte Rechtsanwälte mbB
Siebertstrasse 3
81675 München (DE)**

(54) **METHOD FOR PRODUCING HYDROGENATED POLYMER BY USING PLURALITY OF SOLVENTS**

(57)    Provided is a hydrogenation method using a solvent that satisfactorily dissolves a polymer before and after hydrogenation. The present invention provides a method for producing a hydrogenated polymer by hydrogenating the aromatic ring of an aromatic vinyl compound-based polymer, the method comprising performing a hydrogenation reaction using the aromatic vinyl compound-based polymer, a solvent, and a hydrogenation catalyst, wherein the solvent is a mixed solvent containing at least one first solvent and at least one second solvent, and the Hansen solubility parameter (HSP) value of the mixed solvent 1) falls within a Hansen sphere on a three-dimensional space consisting of $\delta d$, $\delta p$, and $\delta h$ axes of the aromatic vinyl compound-based polymer before hydrogenation, and 2) falls within a Hansen sphere on a three-dimensional space consisting of $\delta d$, $\delta p$, and $\delta h$ axes of the aromatic vinyl compound-based polymer after hydrogenation.

EP 4 509 533 A1

**Description**

TECHNICAL FIELD

The present invention relates to a method for producing a hydrogenated polymer using a plurality of solvents, and the like. In particular, the present invention relates to a method for producing a hydrogenated polymer by hydrogenation (aromatic hydrogenation) of an aromatic ring of an aromatic vinyl compound-based polymer.

BACKGROUND ART

In recent years, polymers such as acrylic resins, methacrylic resins, styrene resins, polycarbonate resins, and cyclic polyolefin resins are used in various applications, and are in particularly high demand as optical materials such as optical lenses and optical disc substrates due to their optical properties. This type of optical material requires not only high transparency, but also high performance with excellent balance of high heat resistance, low water absorption, mechanical properties, etc.

In order to meet such requirements, various modifications of polymers have been made. One example of such modification is hydrogenation (aromatic hydrogenation) of aromatic polymers.

For example, Japanese Patent No. 5540703 (Patent literature 1) relates to hydrogenation of aromatic vinyl compound/(meth)acrylate copolymers, and Japanese Unexamined Patent Application Publication No. 2014-77044 (Patent literature 2) relates to a method for producing an aromatic hydrogenated polymer using a sulfur-free feedstock. In addition, Japanese Patent No. 2890748 (Patent literature 3) relates to a method for producing a hydrogenated styrene-based resin, and Japanese Unexamined Patent Application Publication (Translation of PCT) No. 2001-527095 (Patent literature 4), Japanese Unexamined Patent Application Publication (Translation of PCT) No. 2002-511501 (Patent literature 5), and Japanese Unexamined Patent Application Publication (Translation of PCT) No. 2002-511508 (Patent literature 6) relate to methods for hydrogenating aromatic polymers. Japanese Patent No. 4224655 (Patent literature 7) and Japanese Patent No. 5007688 (Patent literature 8) relate to alicyclic hydrocarbon copolymers or to polymers containing alicyclic structures, and describe that these polymers can be obtained by hydrogenation of aromatic polymers.

CITATION LIST

Patent Literature

Patent literature 1: Japanese Patent No. 5540703
Patent literature 2: Japanese Unexamined Patent Application Publication No. 2014-77044
Patent literature 3: Japanese Patent No. 2890748
Patent literature 4: Japanese Unexamined Patent Application Publication (Translation of PCT) No. 2001-527095
Patent literature 5: Japanese Unexamined Patent Application Publication (Translation of PCT) No. 2002-511501
Patent literature 6: Japanese Unexamined Patent Application Publication (Translation of PCT) No. 2002-511508
Patent literature 7: Japanese Patent No. 4224655
Patent literature 8: Japanese Patent No. 5007688

SUMMARY OF INVENTION

Technical Problem

However, hydrogenation of an aromatic polymer sometimes causes precipitation of the hydrogenated polymer obtained after the hydrogenation due to its low solubility in the reaction solvent, and this may reduce productivity because of the need for a step of removing the precipitate.

Under the above circumstances, there is a need for a hydrogenation method using a solvent that can dissolve the polymer well before and after the hydrogenation.

Solution to Problem

The present inventors have diligently studied and have arrived at the present invention by using a solvent mixture containing at least one type of first solvent and at least one type of second solvent and adjusting the Hansen solubility parameters (HSP) of each solvent or a mixture of these solvents in a method for producing a hydrogenated polymer by hydrogenating an aromatic ring of an aromatic vinyl compound-based polymer.

Specifically, the present invention provides the following production method, and the like.

[1] A method for producing a hydrogenated polymer by hydrogenating an aromatic ring of an aromatic vinyl compound-based polymer, the method comprising performing hydrogenation reaction using the aromatic vinyl compound-based polymer, a solvent, and a hydrogenation catalyst,

wherein the solvent is a solvent mixture containing at least one type of first solvent and at least one type of second solvent, and
wherein Hansen solubility parameter (HSP) value of the solvent mixture:

1) falls within a Hansen sphere in a three-dimensional space consisting of $\delta d$, $\delta p$, and $\delta h$ axes of the aromatic vinyl compound-based polymer before the hydrogenation; and
2) falls within a Hansen sphere in a three-dimensional space consisting of $\delta d$, $\delta p$, and $\delta h$ axes of the aromatic vinyl compound-based polymer after the hydrogenation.

[2] A method for producing a hydrogenated polymer by hydrogenating an aromatic ring of an aromatic vinyl compound-based polymer, the method comprising performing hydrogenation reaction using the aromatic vinyl compound-based polymer, a solvent, and a hydrogenation catalyst,

wherein the solvent is a solvent mixture containing at least one type of first solvent and at least one type of second solvent,
wherein Hansen solubility parameters (HSP) of the at least one type of first solvent are each as follows:

$\delta d$: 10-20 (preferably 11-19, more preferably 12-18, still more preferably 14-17);
$\delta p$: 1-15 (preferably 2-12, more preferably 3-10, still more preferably 4-8); and
$\delta h$: 1-25 (preferably 2-20, more preferably 4-15, still more preferably 5-10),

wherein HSP of the at least one type of second solvent are each as follows:

$\delta d$: 10-20 (preferably 11-19, more preferably 12-18, still more preferably 14-18);
$\delta p$: 0 to less than 1 (preferably 0-0.9, more preferably 0-0.6, still more preferably 0-0.4); and
$\delta h$: 0-2 (preferably 0-1.5, more preferably 0-1, still more preferably 0-0.8),

wherein the weight ratio of the at least one type of first solvent to the at least one type of second solvent (first:second ratio) is 1:9-9:1 (preferably 2:8-9:1, more preferably 2:8-8:2), and
wherein the first solvent is a solvent selected from the group consisting of an ester solvent, an aromatic solvent, a monocyclic monoterpene, and a dioxane.

[3] The method according to [1], wherein a weight ratio of the at least one type of first solvent to the at least one type of second solvent (first: second ratio) is 1:9-9:1 (preferably 2:8-9:1, more preferably 2:8-8:2).
[4] The method according to [1] or [3], further comprising obtaining a Hansen sphere of the aromatic vinyl compound-based polymer before the hydrogenation and a Hansen sphere of the aromatic vinyl compound-based polymer after the hydrogenation.
[5] The method according to any one of [1]-[4], wherein HSP of the solvent mixture are each as follows:

$\delta d$: 15.6-16.7;
$\delta p$: 0.3-4.7; and
$\delta h$: 0.5-5.8.

[6] The method according to any one of [1]-[5], wherein the at least one type of first solvent comprises one or more selected from the group consisting of methyl acetate, ethyl acetate, butyl acetate, methyl isobutyrate, methyl propionate, and propylene glycol monomethyl ether acetate, and preferably comprises one or more selected from the group consisting of butyl acetate, methyl isobutyrate, and methyl propionate.
[7] The method according to any one of [1]-[6], wherein the at least one type of second solvent comprises one or more selected from the group consisting of a saturated hydrocarbon solvent and a hydrogenated product of monocyclic monoterpene.
[8] The method according to any one of [1]-[7], wherein the at least one type of second solvent comprises one or more selected from the group consisting of cyclohexane, a C7-C15 monoalkylcyclohexane, a C8-C15 dialkylcyclohexane, a C9-C15 trialkylcyclohexane, a C10-C15 tetraalkylcyclohexane, cyclooctane, a C9-C15 monoalkylcyclooctane, a C10-C15 dialkylcyclooctane, a C11-C15 trialkylcyclooctane, a C12-C15 tetraalkylcyclooctane, n-octane, and n-decane, and preferably comprises one or more selected from the group consisting of cyclohexane, a C7-C15 monoalkylcyclohexane, a C8-C15 dialkylcyclohexane, a C9-C15 trialkylcyclohexane, and a C10-C15 tetraalkylcyclohexane.

[9] The method according to any one of [1]-[7], wherein the at least one type of second solvent comprises a C9 alkylcyclohexane and/or a C10 alkylcyclohexane.

[10] The method according to any one of [1]-[9], wherein the first solvent has a boiling point of 50°C or higher and an ignition point of 400°C or higher.

[11] The method according to any one of [1]-[10], wherein the second solvent has a boiling point of 80°C or higher and an ignition point of 230°C or higher.

[12] The method according to any one of [1]-[11], wherein the aromatic vinyl compound-based polymer comprises one or more selected from the group consisting of a copolymer of styrene and butadiene, a copolymer of styrene and isoprene, a copolymer of styrene and methyl methacrylate, a copolymer of styrene and maleic anhydride, a copolymer of styrene and vinyl acetate, and polystyrene.

[13] The method according to any one of [1]-[12], comprising forming a polymeric resin by devolatilization extrusion after the hydrogenation reaction.

[14] The method according to any one of [1]-[13], further comprising a concentration step between the hydrogenation reaction and the devolatilization extrusion.

[15] The method according to any one of [1]-[14], wherein the hydrogenation catalyst is a solid catalyst loaded with one or more selected from the group consisting of palladium, platinum, ruthenium, rhodium, and nickel.

ADVANTAGEOUS EFFECTS OF INVENTION

According to one aspect of the present invention, there is provided a method for producing a hydrogenated polymer by hydrogenation of an aromatic ring of an aromatic vinyl compound-based polymer using a solvent that dissolves the polymer well before and after the hydrogenation. According to a preferred aspect of the present invention, by using a solvent mixture containing at least one type of first solvent and at least one type of second solvent, the polymer can be kept dissolved in the solvent both before and after the hydrogenation, thereby eliminating the need for a step of removing a precipitate after the hydrogenation and thus improving productivity. According to another preferred aspect of the present invention, the reaction rate can be enhanced because the polymer can be kept dissolved in the solvent both before and after the hydrogenation.

DESCRIPTION OF EMBODIMENTS

Hereinafter, the present invention will be described in detail. The following embodiment is an example to illustrate the present invention and is not intended to limit the present invention to this embodiment only. The present invention may be implemented in various embodiments without departing from the gist thereof.

[Method for producing hydrogenated polymer]

According to a first aspect of the present invention, there is provided a method for producing a hydrogenated polymer by hydrogenating an aromatic ring of an aromatic vinyl compound-based polymer, the method comprising performing hydrogenation reaction using the aromatic vinyl compound-based polymer, a solvent, and a hydrogenation catalyst,

wherein the solvent is a solvent mixture containing at least one type of first solvent and at least one type of second solvent,
wherein Hansen solubility parameter (HSP) value of the solvent mixture:

1) falls within a Hansen sphere in a three-dimensional space consisting of $\delta$d, $\delta$p, and $\delta$h axes of the aromatic vinyl compound-based polymer before the hydrogenation; and
2) falls within a Hansen sphere in a three-dimensional space consisting of $\delta$d, $\delta$p, and $\delta$h axes of the aromatic vinyl compound-based polymer after the hydrogenation.

According to a second aspect of the present invention, there is provided a method for producing a hydrogenated polymer by hydrogenating an aromatic ring of an aromatic vinyl compound-based polymer, the method comprising performing hydrogenation reaction using the aromatic vinyl compound-based polymer, a solvent, and a hydrogenation catalyst,

wherein the solvent is a solvent mixture containing at least one type of first solvent and at least one type of second solvent,
wherein Hansen solubility parameters (HSP) of the at least one type of first solvent are each as follows:

$\delta$d: 10-20;
$\delta$p: 1-15; and
$\delta$h: 1-25,

wherein HSP of the at least one type of second solvent are each as follows:

$\delta$d: 10-20;
$\delta$p: 0 to less than 1; and
$\delta$h: 0-2,

wherein the weight ratio of the at least one type of first solvent to the at least one type of second solvent (first:second ratio) is 1:9-9:1, and
wherein the first solvent is a solvent selected from the group consisting of ester solvents, aromatic solvents, monocyclic monoterpenes, and dioxanes.

Hereinafter, specific embodiments of the first and second aspects of the present invention will be described, and unless otherwise stated, the following embodiments below are applicable to both the first and second aspects.

<Aromatic vinyl compound-based polymer>

A production method according to some embodiments of the present invention relates to a method for producing a hydrogenated polymer by hydrogenation of an aromatic ring of an aromatic vinyl compound-based polymer. Herein, an "aromatic vinyl compound-based polymer" refers to a polymer that contains a unit derived from an aromatic vinyl compound as a structural unit. Therefore, an aromatic vinyl compound-based polymer may be a polymer consisting of a unit derived from one type of aromatic vinyl compound (homopolymer), or a copolymer containing units derived from two or more types of aromatic vinyl compounds as its structural units or containing units derived from one or more types of aromatic vinyl compounds and units derived from one or more types of compounds other than aromatic vinyl compounds as its structural units. A unit derived from an aromatic vinyl compound refers to a unit having a structure in which the C=C double bond of a vinyl group in the aromatic vinyl compound is opened by polymerization.

(Monomer)

Examples of an aromatic vinyl compound-based polymer used in the production method according to some embodiments of the present invention include, but are not limited to, polymers that use, as an aromatic vinyl compound monomer, styrene; an alkylstyrene such as $\alpha$-methylstyrene, $\alpha$-ethylstyrene, o-methylstyrene, m-methylstyrene, p-methylstyrene, 1,3-dimethylstyrene, and p-tert-butylstyrene (the number of carbon atoms at the alkyl group portion is preferably 1-5); p-hydroxystyrene; an alkoxystyrene such as p-methoxystyrene, m-butoxystyrene, and p-butoxystyrene (the number of carbon atoms at the alkoxy group portion is preferably 1-5); a halogenated styrene such as o-chlorostyrene, m-chlorostyrene, p-chlorostyrene, 2,4-dichlorostyrene, and 2,6-dichlorostyrene; and vinylnaphthalene, vinylanthracene, etc. One of these monomers may be used alone, or several monomers may be used in combination. In a preferred embodiment of the present invention, styrene is used as the aromatic vinyl compound monomer.

An aromatic vinyl compound-based polymer used in the production method according to some embodiments of the present invention is a polymer that uses, in addition to an aromatic vinyl compound monomer, a monomer of a compound other than aromatic vinyl compounds. Examples of such a monomer of a compound other than aromatic vinyl compounds include (meth)acrylates, dienes, and acid anhydrides. Examples of (meth)acrylates include alkyl esters of (meth)acrylic acid such as methyl (meth)acrylate, ethyl (meth)acrylate, butyl (meth)acrylate, dodecyl (meth)acrylate, and octadecyl (meth)acrylate (the number of carbon atoms at the alkyl group portion is preferably 1-20, more preferably 1-10, and still more preferably 1-5); cycloalkyl esters of (meth)acrylic acid or cyclic saturated hydrocarbon esters such as cyclohexyl (meth)acrylate and isobornyl (meth)acrylate (in all cases, the number of ring-forming carbon atoms is preferably 5-20, and more preferably 5-10); hydroxyalkyl esters of (meth)acrylic acid such as (2-hydroxyethyl) (meth) acrylate, (2-hydroxypropyl) (meth)acrylate, and (2-hydroxy-2-methylpropyl) (meth)acrylate (the number of carbon atoms at the alkyl group portion is preferably 1-20, more preferably 1-10, and still more preferably 1-5); alkoxyalkyl esters of (meth)acrylic acid such as (2-methoxyethyl) (meth)acrylate and (2-ethoxyethyl) (meth)acrylate (the number of carbon atoms at the alkyl group portion is preferably 1-20, more preferably 1-10, and still more preferably 1-5, while the number of carbon atoms at the alkoxy group portion is preferably 1-10, more preferably 1-5, and still more preferably 1 or 2); phenyl esters of (meth)acrylic acid such as phenyl (meth)acrylate; arylalkyl esters of (meth)acrylic acid such as benzyl (meth) acrylate (the number of carbon atoms at the aryl group portion is preferably 6-10 while the number of carbon atoms at the alkyl group portion is preferably 1-5); and (meth)acrylic esters having a phospholipid structure such as 2-(meth) acroyloxyethyl phosphorylcholine. One type of (meth)acrylate may be used alone, or two or more types of (meth)acrylates may be used in combination. As a (meth)acrylate, methyl (meth)acrylate is preferred.

Examples of dienes include 1,2-butadiene, 1,3-butadiene, 1,2-pentadiene, 1,3-pentadiene, 1,4-pentadiene, 1,2-hexadiene, 1,3-hexadiene, 1,4-hexadiene, 1,5-hexadiene, 1,3-heptadiene, 1,3-octadiene 1,3-nonadiene, 1,3-decadiene, isoprene, cyclopentadiene, 1,3-cyclohexadiene, and 1,4-cyclohexadiene. One type of diene may be used alone, or two or more types of dienes may be used in combination. A conjugated diene such as 1,3-butadiene or isoprene is preferred as a diene.

Examples of acid anhydrides include acid anhydrides such as maleic acid, itaconic acid, citraconic acid, and aconitic acid, of which maleic anhydride is preferred.

An aromatic vinyl compound-based polymer used in the production method according to some embodiments of the present invention may contain a monomer component other than those listed above as long as the effect of the present invention is not impaired. For example, a monomer component other than those listed above may be contained in a molar ratio of 0-10% or 0-5% to the total monomer components.

In a preferred embodiment of the present invention, the aromatic vinyl compound-based polymer comprises one or more selected from the group consisting of a copolymer of styrene and butadiene (1,2-butadiene, 1,3-butadiene, or a combination thereof), a copolymer of styrene and isoprene, a copolymer of styrene and methyl methacrylate, a copolymer of styrene and maleic anhydride, a copolymer of styrene and vinyl acetate, and polystyrene. In another preferred embodiment of the present invention, the aromatic vinyl compound-based polymer is a polymer selected from the group consisting of a copolymer of styrene and butadiene (1,2-butadiene, 1,3-butadiene, or a combination thereof), a copolymer of styrene and isoprene, a copolymer of styrene and methyl methacrylate, a copolymer of styrene and maleic anhydride, a copolymer of styrene and vinyl acetate, and polystyrene. These polymers may be polymerized from each monomer as described below, or a commercially available polymer may be used. For example, "GPPS HF-77" provided by PS Japan Corporation can be used as polystyrene.

(Method for producing aromatic vinyl compound-based polymer)

An aromatic vinyl compound-based polymer can be produced by polymerizing various monomers. There is no particular restriction on the method for polymerizing one or more types of aromatic vinyl compounds or on the method for copolymerizing an aromatic vinyl compound with a monomer other than the aromatic vinyl compound monomer, and a known method such as radical polymerization, ion polymerization, or coordination polymerization can be used. From an industrial point of view, radical polymerization method is preferred because of its simplicity. As the radical polymerization method, a known method such as bulk polymerization method, solution polymerization method, emulsion polymerization method, or suspension polymerization method can be selected as appropriate. For example, examples of bulk polymerization method and solution polymerization method include continuous polymerization method in which a monomer composition, i.e., a mixture of a monomer component, a chain transfer agent, and a polymerization initiator (and a solvent in the case of solution polymerization method), is continuously fed into a complete mixing tank and polymerized at 100-180°C. Examples of the solvent used in solution polymerization method include a hydrocarbon solvent such as toluene, xylene, cyclohexane, and methylcyclohexane; an ester solvent such as ethyl acetate; a ketone solvent such as acetone and methyl ethyl ketone; an ether solvent such as tetrahydrofuran and 1,4-dioxane; and an alcohol solvent such as methanol and isopropanol. The polymerized reaction mixture is removed from the complete mixing tank and introduced into a devolatilization extruder or a vacuum devolatilization vessel to devolatilize volatile matter (monomer component, solvent, etc.) to obtain a polymer of an aromatic vinyl compound or a copolymer of an aromatic vinyl compound and a monomer other than the aromatic vinyl compound monomer (these are also collectively referred to as an "aromatic vinyl compound-based polymer").

In the structural units of the aromatic vinyl compound-based polymer, the molar ratio (A/B) of the structural unit of the monomer other than the aromatic vinyl compound monomer (A moles) to the structural unit derived from the aromatic vinyl compound (B moles) is preferably 0-4, more preferably 0-3, and still more preferably 0-2.

The weight average molecular weight of the aromatic vinyl compound-based polymer used in some embodiments of the present invention is preferably 10,000-1,000,000, more preferably 50,000-700,000, still more preferably 100,000-500,000, and particularly preferably 130,000-250,000. Although polymers less than 10,000 or greater than 1,000,000 can also be aromatic hydrogenated by the method according to some embodiments of the present invention, copolymers with a weight average molecular weight within the above range are preferred because they have sufficient mechanical strength, can withstand practical use, have moderate viscosity, and are easy to handle. Herein, a weight average molecular weight is a value in terms of polystyrene equivalent obtained by gel permeation chromatography (GPC) using tetrahydrofuran as the solvent.

<Hydrogenation>

Herein, "hydrogenation of an aromatic vinyl compound-based polymer" refers to a reaction that adds hydrogen to an aromatic ring of an aromatic vinyl compound-based polymer (e.g., reduction of benzene ring to cyclohexane). Such hydrogenation is also called aromatic hydrogenation or hydrogen addition.

(Solvent)

The aromatic vinyl compound-based polymer used in some embodiments of the present invention is dissolved in an appropriate solvent for hydrogenation. As points to be considered when selecting the solvent, the solvent preferably provides good solubility of the polymer before and after the hydrogenation (i.e., both aromatic polymer and hydrogenated polymer) and preferably has no site to be hydrogenated. Furthermore, the solvent that allows rapid reaction is more preferred. This is because a higher hydrogenation rate results in a shorter reaction time, which minimizes damage to the polymer, such as a decrease in the molecular weight. In addition, the solvent preferably has a high ignition point assuming devolatilization of the solvent component after the hydrogenation. It is advantageous if the devolatilization extrusion process can be performed because it allows production of a hydrogenated polymer to be performed in an efficient manner.
The solvent used in the production method according to some embodiments of the present invention is a solvent mixture containing at least one type of first solvent and at least one type of second solvent. Here, the first solvent preferably provides high solubility of the polymer before the hydrogenation, and the second solvent preferably provides high solubility of the polymer after the hydrogenation. However, the solubility of a polymer in a solvent is not easy to predict, and mixing such two types of solvents does not necessarily result in a solvent in which both the polymer before and after the hydrogenation reaction are well dissolved. Under such circumstances, the present inventors unexpectedly found that a solvent in which both the polymer before and after the hydrogenation reaction are well dissolved can be obtained when the Hansen solubility parameter (HSP) value of a solvent mixture: 1) falls within a Hansen sphere in a three-dimensional space consisting of $\delta d$, $\delta p$, and $\delta h$ axes of an aromatic vinyl compound-based polymer before the hydrogenation; and 2) falls within a Hansen sphere in a three-dimensional space consisting of $\delta d$, $\delta p$, and $\delta h$ axes of the aromatic vinyl compound-based polymer after the hydrogenation (first aspect of the invention). The present inventors also found that a solvent in which both the polymer before and after the hydrogenation reaction are well dissolved can be obtained when Hansen solubility parameters (HSP) of at least one type of first solvent are $\delta d$: 10-20, $\delta p$: 1-15, and $\delta h$: 1-25; HSP of at least one type of second solvent are $\delta d$: 10-20, $\delta p$: 0 to less than 1, and $\delta h$: 0-2; the weight ratio of at least one type of first solvent to at least one type of second solvent (first:second ratio) is 1:9-9:1; and the first solvent is a solvent selected from the group consisting of ester solvents, aromatic solvents, monocyclic monoterpenes, and dioxanes (second aspect of the invention). Hereinafter, Hansen solubility parameters and Hansen spheres will be described in detail.

<Hansen solubility parameters>

SP value (solubility parameter, or solubility factor) is a value that indicates the strength of an intermolecular force in a molecular population. Those with closer SP values are more easily mixed, wetted, and bonded with each other. In addition to Hildebrand's SP value ($\delta t$), there is Hansen SP value (HSP value: London dispersion force component $\delta d$, dipole-dipole force component $\delta p$, and hydrogen bonding force component $\delta h$) which has the following relationship:

$$\delta t^2 = \delta d^2 + \delta p^2 + \delta h^2$$

Herein, HSP of solvents and solutes may be those recorded in a dedicated software (HSPiP). Those not recorded in the database can be calculated by the Y-MB method. As used herein, "Hansen solubility parameter (HSP) value" refers to the coordinates in a three-dimensional space consisting of $\delta d$, $\delta p$, and $\delta h$ axes derived from the Hansen solubility parameters of the above three components.
The HSP of various solvents, including those used in the present invention, are shown in Table 1 and Table 2 below. The term "Calculated value" in the remarks column of the table means that the value was obtained by the Y-MB method, which can be calculated by a dedicated software (HSPiP 5th Edition, version 5.2.05).

[Table 1] Table 1: HSP of each solvent

| Solvent | δd | δp | δh | Remarks |
|---|---|---|---|---|
| Methyl isobutyrate (IBM) | 15.6 | 5.1 | 6.1 | Calculated value |
| Tetrahydrofuran (THF) | 16.8 | 5.7 | 8 | |
| 1,4-Dioxane | 17.5 | 1.8 | 9 | |
| Butyl acetate | 15.8 | 5.1 | 6.1 | |
| Ethyl acetate | 15.8 | 5.3 | 7.2 | |
| Methyl isobutyl ketone (MIBK) | 15.3 | 6.1 | 4.1 | |
| Styrene | 18.6 | 1 | 4.1 | |
| Toluene | 18 | 1.4 | 2 | |
| m-Xylene | 17.8 | 1 | 3.1 | |
| D-limonene | 17.2 | 1.8 | 4.3 | |
| Decalin | 17.6 | 0 | 0 | |
| Dimethylformamide (DMF) | 17.4 | 12.3 | 22.3 | |
| Methanol | 14.7 | 12.3 | 22.3 | |
| Ethylene glycol | 17.0 | 11 | 26 | |
| Methyl-t-butyl ether | 14.8 | 4.3 | 5 | |
| Ethylene glycol dimethyl ether | 15.4 | 6.3 | 6 | |
| Cyclohexane | 16.8 | 0 | 0.2 | |
| Methyl cyclohexane | 16 | 0 | 1 | |
| Ethyl cyclohexane | 16.1 | 0.1 | 0.1 | |
| n-Butylcyclohexane | 16.2 | 0 | 0.6 | |
| 1,3-Dimethylcyclohexane | 16.0 | 0.1 | 0.1 | |
| 1,2,4-Trimethylcyclohexane | 15.8 | 0.1 | 0.1 | |
| 1,2,3,4-Tetramethylcyclohexane | 15.6 | 0.1 | 0.1 | |
| 1,2,4,5-Tetramethylcyclohexane | 15.5 | 0.1 | 0.1 | Calculated value |
| 1,2,3,5-Tetramethylcyclohexane | 15.5 | 0.1 | 0.1 | Calculated value |

[Table 2] Table 2: HSP of each solvent

| Solvent | \| δd | \| δp | \| δh | \| Remarks |
|---|---|---|---|---|
| Acetone | 15.5 | 10.4 | 7 | |
| Acetonitrile | 15.3 | 18 | 6.1 | |
| 1-Butanol | 16 | 5.7 | 15.8 | |
| γ-Butyrolactone | 18 | 16.6 | 7.4 | |
| Chloroform | 17.8 | 3.1 | 5.7 | |
| Cyclohexanol | 17.4 | 4.1 | 13.5 | |
| Diacetone alcohol | 15.8 | 8.2 | 10.8 | |
| Diethylene glycol | 16.6 | 12 | 19 | |
| Dimethyl sulfoxide (DMSO) | 18.4 | 16.4 | 10.2 | |
| Ethanol | 15.8 | 8.8 | 19.4 | |
| Methyl ethyl ketone (MEK) | 16 | 9 | 5.1 | |

(continued)

| Solvent | δd | δp | δh | Remarks |
|---|---|---|---|---|
| N-methyl-2-pyrrolidone | 18 | 12.3 | 7.2 | |
| Dichloromethane | 17 | 7.3 | 7.1 | |
| Ethylene dichloride | 18 | 7.4 | 4.1 | |
| Acetic anhydride | 16 | 11.7 | 10.2 | |
| Aniline | 20.1 | 5.8 | 11.2 | |
| Nitrobenzene | 20 | 10.6 | 3.1 | |
| Propylene carbonate | 20 | 18 | 4.1 | |
| Cyclohexanone | 17.8 | 8.4 | 5.1 | |
| Cyclohexylamine | 17.2 | 3.1 | 11.3 | |
| 2-Methyl-1,3-dioxolane | 17.8 | 8.4 | 7.7 | |
| Piperidine | 17.3 | 4.5 | 8.2 | |
| Cyclohexene | 17.2 | 1 | 2 | |

The HSP of a solvent mixture can be determined from the average volume of each solvent. Specifically, to determine $\delta d_{AB}$ for a solvent mixture consisting of solvents A and B in a volume ratio of 9:1, the equation "$\delta d_{AB} = 0.9 \times \delta d_A + 0.1 \times \delta d_B$" is used for the calculation provided that $\delta d$ of solvents A and B are $\delta d_A$ and $\delta d_B$, respectively. If the mixing ratio of the solvent mixture is already known, calculation can be performed using the mixing ratio. If the mixing ratio is unknown, the mixing ratio can be obtained by measuring the mass ratio of each solvent by the internal standardization of gas chromatography-mass spectrometry (GC) and determining the volume ratio from the relative density of each solvent.

(Hansen sphere)

A Hansen sphere is a sphere that can be obtained by dissolving a resin in multiple solvents (about 10-30 solvents) to examine the solubility, and plotting the results on a three-dimensional space (Hansen space) consisting of $\delta d$, $\delta p$ and $\delta h$ axes. The Hansen solubility parameter (HSP) value ($\delta Tot$) of each resin is obtained from the center coordinates of the Hansen sphere obtained as above. Specifically, a Hansen sphere can be obtained using the method described in EXAMPLES herein.

As solvents used for obtaining a Hansen sphere of a resin, 10 or more, preferably 12 or more, still more preferably 14 or more types of solvents selected from the group consisting of acetone, acetonitrile, 1-butanol, butyl acetate, γ-butyrolactone, chloroform, cyclohexane, cyclohexanol, diacetone alcohol, diethylene glycol, DMF, DMSO, 1,4-dioxane, ethanol, ethyl acetate, MEK, MIBK, N-methyl-2-pyrrolidone, dichloromethane, decalin, styrene, ethylene dichloride, IBM, toluene, m-xylene, acetic anhydride, aniline, nitrobenzene, propylene carbonate, cyclohexanone, cyclohexylamine, 2-methyl-1,3 dioxolane, piperidine, and cyclohexene can be used. In some embodiments of the present invention, 14 or more types of solvents including at least acetone, acetonitrile, butyl acetate, γ-butyrolactone, chloroform, cyclohexane, DMF, 1,4-dioxane, ethanol, ethyl acetate, MEK, MIBK, IBM, and toluene may be used. Alternatively, in some embodiments of the present invention, Hansen spheres of SBC resin before and after the hydrogenation can be obtained using 15 types of solvents consisting of acetone, acetonitrile, butyl acetate, γ-butyrolactone, chloroform, cyclohexane, DMF, 1,4-dioxane, ethanol, ethyl acetate, MEK, MIBK, IBM, toluene, and m-xylene. Alternatively, in some embodiments of the present invention, Hansen spheres of PS resin before and after the hydrogenation can be obtained using 21 types of solvents consisting of acetone, acetonitrile, butyl acetate, γ-butyrolactone, chloroform, cyclohexane, cyclohexanol, DMF, DMSO, 1,4-dioxane, ethanol, ethyl acetate, MEK, MIBK, N-methyl-2-pyrrolidone, dichloromethane, decalin, styrene, ethylene dichloride, IBM, and toluene. In some embodiments of the present invention, a Hansen sphere of SMA resin can be obtained using 33 types of solvents consisting of acetone, acetonitrile, 1-butanol, butyl acetate, γ-butyrolactone, chloroform, cyclohexane, cyclohexanol, diacetone alcohol, diethylene glycol, DMF, DMSO, 1,4-dioxane, ethanol, ethyl acetate, MEK, MIBK, N-methyl-2-pyrrolidone, dichloromethane, decalin, styrene, ethylene dichloride, IBM, toluene, m-xylene, acetic anhydride, aniline, nitrobenzene, propylene carbonate, cyclohexylamine, 2-methyl-1,3 dioxolane, piperidine, and cyclohexene. In some embodiments of the present invention, a Hansen sphere of SMA resin after the hydrogenation can be obtained using 26 types of solvents consisting of acetone, acetonitrile, butyl acetate, γ-butyrolactone, chloroform, cyclohexane, cyclohexanol, DMF, DMSO, 1,4-dioxane, ethanol, ethyl acetate, MEK, MIBK, N-methyl-2-pyrrolidone, dichloromethane, decalin, styrene, ethylene dichloride, IBM, toluene, m-xylene, cyclohexylamine, 2-methyl-1,3 dioxolane, piperidine, and cyclohexene. In some embodiments of the present invention, Hansen spheres of MS resin before and after the hydrogenation can be obtained using 23 types of solvents consisting of acetone, acetonitrile, 1-butanol, butyl acetate, γ-butyrolactone, chloroform, cyclohexane, diacetone alcohol, DMF, 1,4-dioxane, ethanol, ethyl acetate, MEK, MIBK, N-methyl-2-pyrrolidone, dichloromethane, decalin, ethylene dichloride, IBM, toluene, m-xylene, nitrobenzene, and cyclohexanone, or using 24 types of solvents consisting of these solvents plus styrene.

By entering the solubility in multiple solvents into the dedicated software (HSPiP) as described above, a Hansen sphere is gradually formed. Since the shape of the Hansen sphere is gradually fixed by entering data for about 10-30 solvents, reproducible results can be obtained by performing solubility tests until the values of δd, δp, δh, and the radius of the Hansen sphere do not vary by ±0.1 or more.

In some embodiments of the first aspect of the present invention, an aromatic ring of an aromatic vinyl compound-based polymer can be hydrogenated while keeping the polymer dissolved in a solvent both before and after the hydrogenation so that precipitation after the hydrogenation is suppressed and productivity is improved, by using a solvent mixture whose Hansen solubility parameter (HSP) value: 1) falls within a Hansen sphere in a three-dimensional space consisting of δd, δp, and δh axes of the aromatic vinyl compound-based polymer before the hydrogenation; and 2) falls within a Hansen sphere in a three-dimensional space consisting of δd, δp, and δh axes of the aromatic vinyl compound-based polymer after the hydrogenation. Furthermore, the reaction rate can be enhanced because the polymer can be kept dissolved in the solvent both before and after the hydrogenation. Whether or not a HSP value of a certain solvent falls within a Hansen sphere of a resin can be determined by the method described in EXAMPLES.

If available, public information of a Hansen sphere may be used. Alternatively, hydrogenation reaction can be performed after obtaining a Hansen sphere by entering the solubility in about 10-30 solvents into a dedicated software (HSPiP). Some embodiments of the first aspect of the present invention further comprise obtaining a Hansen sphere of an aromatic vinyl compound-based polymer before the hydrogenation and a Hansen sphere of the aromatic vinyl compound-based polymer after the hydrogenation.

In some embodiments of the second aspect of the present invention, Hansen solubility parameters (HSP) of at least one type of first solvent are each as follows:

δd: 10-20;
δp: 1-15; and
δh: 1-25,

HSP of at least one type of second solvent are each as follows:

δd: 10-20;
δp: 0 to less than 1; and
δh: 0-2,
the weight ratio of at least one type of first solvent to at least one type of second solvent (first:second ratio) is 1:9-9:1, and
the first solvent is a solvent selected from the group consisting of ester solvents, aromatic solvents, monocyclic monoterpenes, and dioxanes. This allows the aromatic vinyl compound-based polymer to remain dissolved in the solvent both before and after the hydrogenation when the aromatic ring of the polymer is hydrogenated, thus suppressing precipitation after the hydrogenation and improving productivity. Furthermore, the reaction rate can be enhanced because the polymer can be kept dissolved in the solvent both before and after the hydrogenation.

In some embodiments of the present invention, Hansen solubility parameters (HSP) of at least one type of first solvent are δd: 11-19, δp: 2-12, and δh: 2-20, preferably δd: 12-18, δp: 3-10, and δh: 4-15, and more preferably δd: 14-17, δp: 4-8, and δh: 5-10. In some embodiments of the present invention, Hansen solubility parameters (HSP) of at least one type of second solvent are δd: 11-19, δp: 0-0.9, and δh: 0-1.5, preferably δd: 12-18, δp: 0-0.6, and δh: 0-1, and more preferably δd: 14-18, δp: 0-0.4, and δh: 0-0.8.

In some embodiments of the present invention, the weight ratio of at least one type of first solvent to at least one type of second solvent (first:second ratio) is 1:9-9:1, preferably 1:9-8:2, 1:9-7:3, 1:9-6:4, 1:9-5:5, 2:8-9:1, 2:8-8:2, 2:8-7:3, 2:8-6:4, 2:8-5:5, 3:7-8:2, 2:8-7:3, 2:8-6:4, 2:8-5:5, 3:7-9:1, 3:7-8:2, 3:7-7:3, 3:7-6:4 or 3:7-5:5 If the aromatic vinyl compound-based polymer is polystyrene, the first: second ratio is preferably 1:9-5:5. If the aromatic vinyl compound-based polymer is a copolymer of styrene and methyl methacrylate, the first: second ratio is preferably 3:7-7:3. If the aromatic vinyl compound-based polymer is a copolymer of styrene and maleic anhydride, the first:second ratio is preferably 3:7-9:1. If the aromatic vinyl compound-based polymer is a copolymer of styrene and butadiene or isoprene, the first:second ratio is preferably 1:9-7:3.

In some embodiments of the present invention, a solvent mixture with HSP of δd: 15.6-16.7, δp: 0.3-4.7, and δh: 0.5-5.8 can be used. In another embodiment of the present invention, a solvent mixture with HSP of δd: 16.2-16.7, δp:

0.5-2.4, and $\delta$h: 0.7-3.0 can be used. In another embodiment of the present invention, a solvent mixture with HSP of $\delta$d: 16.0-16.5, $\delta$p: 1.4-3.4, and $\delta$h: 1.8-4.2 can be used. In another embodiment of the present invention, a solvent mixture with HSP of $\delta$d: 15.6-16.5, $\delta$p: 1.4-4.5, and $\delta$h: 1.8-5.4 can be used. In another embodiment of the present invention, a solvent mixture with HSP of $\delta$d: 16.0-16.7, $\delta$p: 0.5-3.4, and $\delta$h: 0.7-4.2 can be used.

In some embodiments of the present invention, at least one type of first solvent comprises one or more selected from the group consisting of methyl acetate, ethyl acetate, butyl acetate, methyl propionate, methyl isobutyrate, and propylene glycol monomethyl ether acetate.

In some embodiments of the present invention, at least one type of second solvent comprises one or more selected from the group consisting of saturated hydrocarbon solvents and hydrogenated products of monocyclic monoterpenes. In a preferred embodiment of the present invention, at least one type of second solvent comprises one or more selected from the group consisting of cyclohexane, a C7-C15 monoalkylcyclohexane, a C8-C15 dialkylcyclohexane, a C9-C15 trialkylcyclohexane, a C10-C15 tetraalkylcyclohexane, cyclooctane, a C9-C15 monoalkylcyclooctane, a C10-C15 dialkylcyclooctane, a C11-C15 trialkylcyclooctane, a C12-C15 tetraalkylcyclooctane, n-octane, and n-decane. In another preferred embodiment of the present invention, at least one type of second solvent comprises a C9 alkylcyclohexane and/or a C10 alkylcyclohexane. As a solvent containing a C9 alkylcyclohexane and/or a C10 alkylcyclohexane, for example, Swaclean 150 provided by Maruzen Petrochemical Co., Ltd. can be used.

In some embodiments of the present invention, the first solvent can be one having a boiling point of 50°C or higher and an ignition point of 400°C or higher. The ignition point is preferably 410°C or higher, more preferably 420°C or higher, and still more preferably 430°C or higher. The upper limit of the boiling point and the upper limit of the ignition point are not limited, but, for example, the boiling point is preferably 150°C or lower and the ignition point is preferably 470°C or lower. By using a solvent with a high boiling point and ignition point, devolatilization extrusion process can be performed and is therefore efficient. Examples of such solvent include methyl isobutyrate, ethyl acetate, butyl acetate, and methyl propionate.

In some embodiments of the present invention, the second solvent has a boiling point of 80°C or higher and an ignition point of 230°C or higher. The ignition point is preferably 250°C or higher, more preferably 280°C or higher, and still more preferably 300°C or higher. The upper limit of the boiling point and the upper limit of the ignition point are not limited, but, for example, the boiling point is preferably 150°C or lower and the ignition point is preferably 470°C or lower. By using a solvent with a high boiling point and ignition point, devolatilization extrusion process can be performed and is therefore efficient. Examples of such solvent include cyclohexane, cyclopentane, methylcyclohexane, n-heptane, 2,2,4-trimethylpentane, cyclooctane, 1,3-dimethylcyclohexane, ethylcyclohexane, 1,2,4-trimethylcyclohexane, decalin (cis, trans-decahydronaphthalene), and Swaclean 150. The approximate value of the ignition point of the solvent mixture containing the first and second solvents can be determined by the weighted average of the ignition point value of each solvent. Specifically, when $w_1$ parts by weight of a first solvent with the ignition point of $x_1$°C is mixed with $w_2$ parts by weight of a second solvent with the ignition point of $x_2$°C, the ignition point x°C of the solvent mixture can be estimated by the following equation.

$$x = x_1 \times w_1/(w_1 + w_2) + x_2 \times w_2/(w_1 + w_2)$$

(Hydrogenation catalyst)

Examples of an active ingredient of a hydrogenation catalyst used in some embodiments of the present invention include a metallic element with catalytic hydrogenation capacity (hereinafter referred to as a "specific metal component"). Examples of the specific metal component include nickel, cobalt, iron, ruthenium, rhodium, palladium, platinum, iridium, copper, silver, molybdenum, tungsten, chromium, and rhenium. The specific metal component may be either in the metallic state or in the cationic state, as long as it exhibits hydrogenation capacity. Among these, a specific metal component in the metallic state is generally preferred because it has stronger hydrogenation capacity and is more stable in a reducing atmosphere. One type of specific metal component can be used alone, or two or more types of specific metal components can be used in combination and may be contained in a solid catalyst. When two or more types of specific metal components are used, there are no particular restrictions on their combination, mixing ratio, or form, and they can be used as a mixture of individual metals, or as an alloy or an intermetallic compound. In some embodiments of the present invention, the hydrogenation catalyst is preferably a solid catalyst loaded with one or more selected from the group consisting of palladium, platinum, ruthenium, rhodium, and nickel, and particularly preferably a solid catalyst loaded with palladium.

There are no particular restrictions on the raw materials of these specific metal components, and those used as raw materials in conventionally known methods for preparing catalysts can be used. Examples of such raw materials include a hydroxide, oxide, fluoride, chloride, bromide, iodide, sulfate, nitrate, acetate, ammine complex, and carbonyl complex of the respective metal elements. One type of them can be used alone, or two or more types of them can be used in combination.

In a hydrogenation catalyst used in some embodiments of the present invention, a specific metal component alone or a specific metal component combined with a metal that do not have catalytic hydrogenation capacity may be used as the metal component. Examples include catalysts such as palladium black and platinum black, which are composed of fine metal powder of a specific metal component, and a sponge catalyst prepared by forming an alloy from a specific metal component, aluminum, and a small amount of additive, and leaching all or part of the aluminum.

To further improve the activity, selectivity, physical properties, etc. of the catalyst, a compound of one or more elements selected from the group consisting of lithium, sodium, potassium, rubidium and cesium as alkali metal elements, magnesium, calcium, strontium and barium as alkaline earth metal elements, fluorine, chlorine, bromine and iodine as halogen elements, and mercury, lead, bismuth, tin, tellurium and antimony as auxiliary additive elements (hereinafter referred to as a "specific additive component") may also be added to the catalyst together with the aforementioned specific metal component.

There are no particular restrictions on the raw materials of these specific additive components, and those used as raw materials in conventionally known methods for preparing catalysts can be used. Examples of such raw materials include a hydroxide, oxide, fluoride, chloride, bromide, iodide, sulfate, nitrate, acetate, and ammine complex of the respective metal elements. One type of them can be used alone, or two or more types of them can be used in combination. There are no restrictions on the method for adding the specific additive component or on the ratio of the specific additive component to the specific metal component.

In a hydrogenation catalyst used in some embodiments of the present invention, the specific metal component may also be combined with a non-metallic substance. Examples of the non-metallic substance mainly include an element by itself, a carbide, a nitride, an oxide, a hydroxide, a sulfate, a carbonate, and a phosphate (hereinafter referred to as a "specific non-metal component"). Specific examples thereof include graphite, diamond, activated carbon, silicon carbide, silicon nitride, aluminum nitride, boron nitride, boron oxide, aluminum oxide (alumina), silicon oxide (silica), titanium oxide, zirconium oxide, hafnium oxide, lanthanum oxide, cerium oxide, yttrium oxide, niobium oxide, magnesium silicate, calcium silicate, magnesium aluminate, calcium aluminate, zinc oxide, chromium oxide, aluminosilicate, aluminosilicophosphate, aluminophosphate, borophosphate, magnesium phosphate, calcium phosphate, strontium phosphate, apatite hydroxide (calcium hydroxyphosphate), apatite chloride, apatite fluoride, calcium sulfate, barium sulfate, and barium carbonate. One type of specific non-metal component can be used alone, or two or more types of specific non-metal components can be used in combination. When two or more types are used, there are no particular restrictions on the combination, mixing ratio, or form, and they can be used as a mixture of individual compounds, a complex compound, or a complex salt.

From the viewpoint of industrial use, a specific non-metal component that can be obtained easily and inexpensively is preferred. Examples of those that are preferable as such specific non-metal component include a zirconium compound, an aluminum compound, and an apatite compound, more preferably a zirconium compound and an apatite compound. Among them, zirconium oxide and apatite hydroxide (calcium hydroxyphosphate) are particularly preferable. Furthermore, some or all of these specific non-metal components can be modified or ion-exchanged using the specific additive component mentioned above.

Carbides, nitrides, and oxides of the specific metal components can also be used as the specific non-metal components. However, some of them are reduced to metals when they are exposed to a hydrogen reduction atmosphere, and in such cases, some of them are used as specific metal components and the rest as non-metal components. Examples of the above cases include oxides such as nickel oxide, iron oxide, cobalt oxide, molybdenum oxide, tungsten oxide, and chromium oxide.

As the hydrogenation catalyst used in some embodiments of the present invention, a specific metal component may be used alone, a specific metal component may be used in combination with a specific non-metal component, and in some cases, a specific additive component may be contained in addition to these. There is no particular restriction on the method for producing the hydrogenation catalyst used in some embodiments of the present invention, and any conventionally known method can be used. Examples of such method include a method in which a raw material compound of a specific metal component is impregnated on a specific non-metal component (loading method), a method in which a raw material compound of a specific metal component and a raw material compound of a specific non-metal component are dissolved together in an appropriate solvent and then precipitated simultaneously using an alkali compound or the like (coprecipitation method), and a method in which a raw material compound of a specific metal component and a specific non-metal component are mixed and homogenized in an appropriate ratio (kneading method).

Depending on the composition of the hydrogenation catalyst or the convenience of the catalyst preparation method, the specific metal component may be prepared in the cationic state and then reduced to the metallic state. Conventionally known reduction method and reducing agent can be used for this purpose, and there are no particular restrictions on them. Examples of the reducing agent include inorganic reducing gases such as hydrogen gas, carbon monoxide gas, ammonia, hydrazine, phosphine, and silane, lower oxygen-containing compounds such as methanol, formaldehyde, and formic acid, and hydrides such as sodium borohydride and lithium aluminum hydride. The specific metal component in the cationic state is converted to the metallic state by a reduction treatment in a gas or liquid phase in the presence of the above reducing agent. The conditions of this reduction treatment can be set to favorable conditions depending on the types and amounts of the specific metal component and reducing agent. This reduction treatment may be performed separately using a catalytic reduction device before the hydrogenation reduction in the production method according to some embodiments of the present invention, or may be performed before the start of the reaction or simultaneously with the reaction operation in a reactor used in the production method according to some embodiments of the present invention.

There are also no restrictions on the metal content and form of the hydrogenation catalyst used in some embodiments of the present invention. It can be in a powder or molded form, and there are also no restrictions on the shape and the molding method in the case of a molded form. For example, a spherical product, a tableted product, an extruded product, and their crushed forms in suitable sizes can be selected as appropriate.

A particularly preferred specific metal component is palladium, and a catalyst using this will be described in detail below. When the specific metal component is palladium, it is economically desirable that the amount of palladium used be small and that palladium be effectively used, considering that palladium is a precious metal. Therefore, it is preferable to use palladium that is dispersed and loaded on a catalyst support.

A palladium compound that is soluble in water or an organic solvent is preferable as a raw material of palladium. Examples of such palladium compound include palladium chloride, tetrachloropalladium salt, tetraamminepalladium salt, palladium nitrate, and palladium acetate. Among these, palladium chloride is preferred because it is highly soluble in water or an organic solvent and is industrially accessible. Palladium chloride can be dissolved in an aqueous sodium chloride solution, dilute hydrochloric acid, ammonia water, etc.

Palladium or a palladium compound is immobilized on a catalyst support by adding a solution of the palladium compound to the catalyst support, or by immersing the catalyst support in a solution of the palladium compound. Common immobilization methods include adsorption on a support, crystallization by solvent distillation, and precipitation using a reducing substance and/or a basic substance that acts on the palladium compound, and any method may be used as appropriate. The palladium content in the hydrogenation catalyst prepared by such a method is, in terms of metal palladium, preferably 0.01-20 mass%, more preferably 0.1-10 mass%, and still more preferably 0.5-5 mass% of the total amount of the hydrogenation catalyst. A palladium content of 0.01 mass% or more provides a more sufficient hydrogenation rate and a higher conversion ratio of the aromatic vinyl compound-based polymer. On the other hand, a palladium content of 20 mass% or less provides even higher dispersion efficiency of palladium in the hydrogenation catalyst, and thus palladium can be used more effectively.

Depending on the palladium compound and the convenience of the catalyst preparation method, palladium may be loaded on a support in the cationic state rather than in the metallic state. In such cases, the loaded cationic palladium (e.g., present in the form of a palladium compound) may be reduced to palladium metal before use. Conventionally known reduction method and reducing agent can be used for this purpose, and there are no particular restrictions on them. Examples of the reducing agent include inorganic reducing gases such as hydrogen gas, carbon monoxide gas, ammonia, and hydrazine, lower oxygen-containing compounds such as methanol, formaldehyde, and formic acid, hydrocarbon compounds such as ethylene, propylene, benzene, and toluene, and hydrides such as sodium borohydride and lithium aluminum hydride. Cationic palladium can be easily reduced to palladium metal by bringing it into contact with a reducing agent in a gas or liquid phase. The conditions of this reduction treatment can be set to favorable conditions depending on the type and amount of the reducing agent. This reduction treatment may be performed separately using a catalytic reduction device before the hydrogenation reduction in the production method according to this embodiment, or before the start of the reaction or simultaneously with the reaction operation in a reactor used in the production method according to this embodiment.

One of the preferred specific non-metal components used with the specific metal component is a zirconium compound, and a hydrogenation catalyst containing this zirconium compound will be described in detail below. The zirconium compound used in some embodiments of the present invention is preferably selected from the group consisting of zirconium oxide, zirconium hydroxide, zirconium carbonate, alkaline-earth zirconate, rare-earth zirconate, and zircon, where one of which may be used alone or two or more of which may be used in combination.

A particularly preferred zirconium compound is zirconium oxide, and there are no restrictions on its preparation process. For example, according to a commonly known preparation method, an aqueous solution of soluble zirconium salt is decomposed with a basic substance to zirconium hydroxide or zirconium carbonate, which is then subjected to pyrolysis or the like. There are no restrictions on the raw material of the above zirconium compound, and examples thereof include zirconium oxychloride, zirconium oxynitrate, zirconium chloride, zirconium sulfate, zirconium tetraalkoxide, zirconium acetate, and zirconium acetylacetonate. One type of them can be used alone, or two or more types of them can be used in combination. Examples of the basic substance used for the decomposition include ammonia, alkylamines, ammonium carbonate, ammonium bicarbonate, sodium hydroxide, sodium carbonate, sodium bicarbonate, potassium hydroxide, potassium carbonate, potassium bicarbonate, magnesium hydroxide, calcium hydroxide, lanthanum hydroxide, yttrium hydroxide, and cerium hydroxide, where one of which may be used alone or two or more of which may be used in combination.

When zirconium oxide is used as the specific non-metal component, there are no particular restrictions on its physical properties, shape, and the like. There is also no restriction on the purity of zirconium oxide, and any commercially available zirconium oxide ranging from general-purpose zirconium oxide to high-purity zirconium oxide can be used as appropriate.

When a specific non-metal component as typified by a zirconium compound is used as a catalyst support, there are no restrictions on the shape, particle size, or physical properties such as porosity of the support, or on the method of loading the metal component. The shape, physical properties of the support, and loading method suitable for the reaction system and conditions can be selected as needed.

(Other reaction conditions)

The concentration of a copolymer (aromatic polymer + aromatic hydrogenated polymer) in a solution during aromatic hydrogenation reaction is usually 1-50 wt%, preferably 3-30 wt%, and more preferably 5-25 wt%. By setting the upper limit of the concentration of the copolymer to a predetermined value or lower, a decrease in the reaction rate, inconvenience in handling due to an increase in solution viscosity, and else can be avoided. On the other hand, from the viewpoint of productivity and/or economy, it is preferable to set the lower limit of the concentration to a predetermined value or higher.

While the hydrogenation (hydrogen addition) reaction in the production method according to some embodiments of the present invention is performed using a feedstock solution of an aromatic vinyl compound-based polymer dissolved in a solvent, the reaction can be carried out either in a suspended bed or in a fixed bed, and a known method such as batch reaction or continuous flow reaction can be used. When the reaction is carried out in a suspended bed, the particle size of the support is usually in the range of 0.1-1,000 $\mu$m, preferably 1-500 $\mu$m, and still more preferably 5-200 $\mu$m. By setting the particle size to a predetermined size or larger, the catalyst can be easily separated after the hydrogenation reaction, and by setting the upper limit of the particle size to a predetermined size or smaller, a decrease in the reaction rate can be prevented.

Preferred reaction conditions include a temperature of 60-250°C, a hydrogen pressure of 3-30 MPa, and reaction time of 3-30 hours. By setting the reaction temperature to a predetermined temperature or higher, the reaction rate becomes faster, and by setting the upper limit of the reaction temperature to a predetermined temperature or lower, side reactions such as degradation of the polymer and hydrogenolysis of the solvent can be suppressed. The reaction rate can be accelerated by increasing the hydrogen pressure to a predetermined value or higher, but from an economic point of view, an upper limit of about 30 MPa is preferable.

An aromatic hydrogenated polymer can be obtained by separating the hydrogenation catalyst and volatile components (solvent, etc.) from the polymer solution after the hydrogenation reaction. Separation of the catalyst can be performed by a known method such as filtration or centrifugation. Considering the effects on coloring, mechanical properties, etc., the concentration of the residual catalyst metal in the polymer is desirably as low as possible, preferably 10 ppm or less, and more preferably 1 ppm or less.

After the catalyst is separated, the polymer is purified by separating volatile components such as the solvent from the resulting aromatic hydrogenated polymer solution by a known method such as: 1) a method in which the solvent is continuously removed from the polymer solution to give a concentrated solution, which is pelletized by extruding the solution in a molten state while heating (also called devolatilization extrusion method); 2) a method in which the solvent is evaporated from the polymer solution to obtain a bulk polymer, which is then pelletized; 3) a method in which the polymer solution is added to a poor solvent or a poor solvent is added to the polymer solution to obtain a precipitate, which is then pelletized; and 4) a method in which the polymer solution is contacted with hot water to obtain a bulk polymer, which is then pelletized. A production method according to a preferred embodiment of the present invention comprises forming a polymeric resin by devolatilization extrusion after the hydrogenation reaction. Devolatilization extrusion can be carried out, for example, by introducing the polymerization liquid obtained in the polymerization tank into a devolatilization extruder equipped with a vent port while maintaining or increasing the temperature to 120°C-180°C, thereby removing volatile matter. The production method according to another preferred embodiment of the present invention further comprises a concentration step between the hydrogenation reaction and the devolatilization extrusion.

When separating the catalyst and volatile components, it is desirable to operate in an inert or non-oxidizing gas atmosphere. While hydrogen, nitrogen, helium, and argon can be used as the inert gas or non-oxidizing gas, it is preferable to operate in an atmosphere of industrially inexpensive nitrogen or hydrogen as a reaction gas.

The hydrogenation rate (aromatic hydrogenation rate) of the hydrogenated polymer obtained by the method according to some embodiments of the present invention is preferably, but not particularly limited to, 95% or more, more preferably 97% or more, and still more preferably 98% or more. The hydrogenation rate can be determined by measuring UV spectra before and after the hydrogenation reaction, as described in

EXAMPLES.

Although the glass transition temperature (Tgm) of the hydrogenated polymer obtained by the method according to some embodiments of the present invention is not particularly limited, it is preferably 70-180°C, and more preferably 100-160°C. Herein, the glass transition temperature is the value determined by differential scanning calorimetry (DSC).

The hydrogenated polymer obtained by the method according to some embodiments of the present invention can be mixed with additives such as an antioxidant, a colorant, a mold release agent, a surfactant, and an antibacterial agent, as appropriate, to form an optical material composition. Since the resulting optical material composition has thermoplasticity, it is possible to manufacture an optical product precisely and economically by various thermoforming processes such as extrusion molding, injection molding, and secondary processing/molding of a sheet molded article. Examples of specific applications of the optical product include various light guide plates, light guides, display front panels, plastic lens substrates, optical filters, optical films, lighting covers, and lighting signs.

EXAMPLES

Hereinafter, the present invention will be described more specifically by way of examples, although the present invention is not particularly limited to the following examples. Evaluation methods of resins were as follows.

(1) Aromatic hydrogenation rate was determined by measuring UV spectra before and after the hydrogenation reaction. Specifically, the percentage of the unhydrogenated aromatic ring was calculated by dissolving a resin in tetrahydrofuran (THF) as a solvent, measuring the absorption spectrum at 260 nm using a quartz cell, and calibrating it with a copolymer resin before the aromatic hydrogenation reaction. The instrument used for the measurement was UV-Visible Spectrophotometer "GENESYS 10S" provided by Thermo Scientific, but there is no particular restriction on the instrument as long as an equivalent instrument is used.

(2) Weight average molecular weight (Mw) was determined by gel permeation chromatography (GPC). A differential refractive index (RI) detector was used as the detector, THF was used as the solvent, and calibration was performed with standard polystyrene. The instrument used for the measurement was high performance liquid chromatography system "Elite LaChrom" provided by Shimadzu Science, but there is no particular restriction on the instrument as long as an equivalent instrument is used.

(3) The glass transition temperature (Tgm) of the resin was determined by differential scanning calorimetry (DSC). The instrument used for the measurement was "DSC7020" provided by SII (now Hitachi High-Tech Science Corporation), but there is no particular restriction on the instrument as long as an equivalent instrument is used.

(4) Method for obtaining HSP of solvent mixture

HSP of each solvent were obtained from the data recorded in the dedicated software (HSPiP). For those not recorded in the software, values calculated by the Y-MB method were used. HSP of a solvent mixture were determined from the average volume of each solvent. Specifically, to determine the d-component ($\delta d_{AB}$) resulting from the London dispersion force for a solvent mixture consisting of solvents A and B in a volume ratio of 9:1, the equation "$\delta d_{AB} = 0.9 \times \delta d_A + 0.1 \times \delta d_B$" was used for the calculation, provided that $\delta d$ of solvents A and B were $\delta d_A$ and $\delta d_B$, respectively.

(5) Calculation of Hansen solubility parameter (HSP) value and Hansen spheres of resin before and after the hydrogenation

Hansen spheres before and after the hydrogenation were obtained by dissolving the resin in multiple solvents (about 10-30 solvents) to examine the solubility, and plotting the results on a three-dimensional space (Hansen space) consisting of $\delta d$, $\delta p$ and $\delta h$ axes. The Hansen solubility parameter (HSP) value of each resin was obtained from the center coordinates of the Hansen sphere obtained as above. Specific processes are shown in the preparation examples below.

Preparation example 1 (Hansen sphere of polystyrene (PS))

The solubility of polystyrene with a weight average molecular weight of 200,000 (Resin 1) (GPPS HF-77 provided by PS Japan Corporation) in each of the 21 solvents listed in Table 3 (those indicated with "O" in Table 3) was examined. In order to do so, Resin 1 in the form of pellets was added to each solvent at room temperature such that the concentration of Resin 1 was 10 wt% of the solvent, and whether or not it dissolved was judged after stirring. No heating or cooling was applied to each solvent. The judgment criteria were based on a penalty system: penalty of one point was given for "complete dissolution", two points for "uniform dispersion", three points for "presence of undissolved pellets", and four points for "presence of whitening or precipitation". If the resin was insoluble, 0 point was given to distinguish it from the dissolved samples. Specifically, the insoluble case with 0 point was distinguished, and then the rest of the dissolved samples were graded in such a way that the penalty point becomes smaller as the dissolution approaches complete dissolution.

The solubility data obtained for these 21 solvents were entered into the dedicated software (HSPiP), and the HSP value of each solvent was plotted on a Hansen space to obtain a Hansen sphere that includes the points of the solvents that dissolved Resin 1. HSP value of each solvent was obtained from the data recorded in the dedicated software (HSPiP). The solubility test was terminated because the Hansen sphere no longer moved after the solubility data of the 21 solvents were entered. The center coordinates of the Hansen sphere were used as the HSP value of Resin 1. Furthermore, the radius of the Hansen sphere was determined. The results obtained are shown in Table 4.

Preparation example 2 (Hansen sphere of hydrogenated polystyrene (PS-H))

Resin 1 was hydrogenated to obtain a hydrogenated polystyrene (Resin 2). Hydrogenation was performed according to the method described in Example 1 below. The solubility of Resin 2 in each of the 21 solvents listed in Table 3 (those indicated with "O" in Table 3) was examined under the same conditions as in Preparation example 1. The solubility test was terminated because the Hansen sphere no longer moved after the solubility data of the 21 solvents were entered. The HSP value and the radius of the Hansen sphere of Resin 2 were determined under the same conditions as in Preparation example 1. The results obtained are shown in Table 4.

Preparation example 3 (Hansen sphere of styrene-maleic anhydride copolymer (SMA) resin)

The solubility of a styrene-maleic anhydride copolymer (SMA) resin with a weight average molecular weight of 160,000 (Resin 3) (XIBOND 120 provided by POLYSCOPE POLYMERS B.V.) in each of the 33 solvents listed in Table 3 (those indicated with "O" in Table 3) was examined under the same conditions as in Preparation example 1. The solubility test was terminated because the Hansen sphere no longer moved after the solubility data of the 33 solvents were entered. The HSP value and the radius of the Hansen sphere of Resin 3 were determined under the same conditions as in Preparation example 1. The results obtained are shown in Table 4.

Preparation example 4 (Hansen sphere of hydrogenated styrene-maleic anhydride copolymer (SMA-H) resin)

Resin 3 was hydrogenated to obtain a styrene-maleic anhydride copolymer (Resin 4). Hydrogenation was performed according to the method described in Example 1 below, except that the resin was changed from PS to SMA. The solubility of Resin 4 in each of the 26 solvents listed in Table 3 (those indicated with "O" in Table 3) was examined under the same conditions as in Preparation example 1. The solubility test was terminated because the Hansen sphere no longer moved after the solubility data of the 26 solvents were entered. The HSP value and the radius of the Hansen sphere of Resin 4 were determined under the same conditions as in Preparation example 1. The results obtained are shown in Table 4.

Preparation example 5 (Hansen sphere of methyl methacrylate-styrene copolymer (MS200) resin)

The solubility of a methyl methacrylate-styrene copolymer (MS200) resin with a weight average molecular weight of 220,000 (Resin 5) (MS200 provided by Toyo Styrene Co., Ltd.) in each of the 24 solvents listed in Table 3 (those indicated with "O" in Table 3) was examined under the same conditions as in Preparation example 1. The solubility test was terminated because the Hansen sphere no longer moved after the solubility data of the 24 solvents were entered. The HSP value and the radius of the Hansen sphere of Resin 5 were determined under the same conditions as in Preparation example 1. The results obtained are shown in Table 4.

Preparation example 6 (Hansen sphere of hydrogenated methyl methacrylate-styrene copolymer (MS200-H) resin)

Resin 5 was hydrogenated to obtain a hydrogenated methyl methacrylate-styrene copolymer (Resin 6). Hydrogenation was performed according to the method described in Example 2 below, except that the resin was changed from PS to MS200. The solubility of Resin 6 in each of the 24 solvents listed in Table 3 (those indicated with "O" in Table 3) was examined under the same conditions as in Preparation example 1. The solubility test was terminated because the Hansen sphere no longer moved after the solubility data of the 24 solvents were entered. The HSP value and the radius of the Hansen sphere of Resin 6 were determined under the same conditions as in Preparation example 1. The results obtained are shown in Table 4.

Preparation example 7 (Hansen sphere of methyl methacrylate-styrene copolymer (MS750) resin)

The solubility of a methyl methacrylate-styrene copolymer (MS750) resin with a weight average molecular weight of 120,000 (Resin 7) (MS750 provided by Toyo Styrene Co., Ltd.) in each of the 23 solvents listed in Table 3 (those indicated with "O" in Table 3) was examined under the same conditions as in Preparation example 1. The solubility test was terminated because the Hansen sphere no longer moved after the solubility data of the 23 solvents were entered. The HSP value and the radius of the Hansen sphere of Resin 7 were determined under the same conditions as in Preparation example 1. The results obtained are shown in Table 4.

Preparation example 8 (Hansen sphere of hydrogenated methyl methacrylate-styrene copolymer (MS750-H) resin)

Resin 7 was hydrogenated to obtain a hydrogenated methyl methacrylate-styrene copolymer (Resin 8). Hydrogenation was performed according to the method described in Comparative example 1 below, except that the resin was changed from PS to MS750. The solubility of Resin 8 in each of the 23 solvents listed in Table 3 (those indicated with "O" in Table 3) was examined under the same conditions as in Preparation example 1. The solubility test was terminated because the Hansen sphere no longer moved after the solubility data of the 23 solvents were entered. The HSP value and the radius of the Hansen sphere of Resin 8 were determined under the same conditions as in Preparation example 1. The results obtained are shown in Table 4.

Preparation example 9 (Hansen sphere of styrene-butadiene copolymer (SBC) resin)

The solubility of a styrene-butadiene copolymer (SBC) resin with a weight average molecular weight of 130,000 (Resin 9) (CLEAREN 530L provided by Denka Company Limited) in each of the 15 solvents listed in Table 3 (those indicated with "O" in Table 3) was examined under the same conditions as in Preparation example 1. The solubility test was terminated because the Hansen sphere no longer moved after the solubility data of the 15 solvents were entered. The HSP value and the radius of the Hansen sphere of Resin 9 were determined under the same conditions as in Preparation example 1. The results obtained are shown in Table 4.

Preparation example 10 (Hansen sphere of hydrogenated styrene-butadiene copolymer (SBC-H) resin)

Resin 9 was hydrogenated to obtain a hydrogenated styrene-butadiene copolymer (Resin 10). Hydrogenation was performed according to the method described in Example 2 below, except that the resin was changed from PS to SBC. The solubility of Resin 10 in each of the 15 solvents listed in Table 3 (those indicated with "O" in Table 3) was examined under the same conditions as in Preparation example 1. The solubility test was terminated because the Hansen sphere no longer moved after the solubility data of the 15 solvents were entered. The HSP value and the radius of the Hansen sphere of Resin 10 were determined under the same conditions as in Preparation example 1. The results obtained are shown in Table 4.

[Table 3]

| Table 3: Solvents used to obtain HSP value of each resin | | | | | | | | | | | |
|---|---|---|---|---|---|---|---|---|---|---|---|
| No. | | PS | PS-H | SMA | SMA-H | MS200 | MS200-H | MS750 | MS750-H | SBC | SBC-H |
| 1 | Acetone | O | O | O | O | O | O | O | O | O | O |
| 2 | Acetonitrile | O | O | O | O | O | O | O | O | O | O |
| 3 | 1-Butanol | | | O | | O | O | O | O | | |
| 4 | Butyl acetate | O | O | O | O | O | O | O | O | O | O |
| 5 | γ-Butyrolactone | O | O | O | O | O | O | O | O | O | O |
| 6 | Chloroform | O | O | O | O | O | O | O | O | O | O |
| 7 | Cyclohexane | O | O | O | O | O | O | O | O | O | O |
| 8 | Cyclohexanol | O | O | O | O | | | | | | |
| 9 | Diacetone alcohol | | | O | | O | O | O | O | | |
| 10 | Diethylene glycol | | | O | | | | | | | |
| 11 | DMF | O | O | O | O | O | O | O | O | O | O |
| 12 | DMSO | O | O | O | O | | | | | | |
| 13 | 1,4-Dioxane | O | O | O | O | O | O | O | O | O | O |
| 14 | Ethanol | O | O | O | O | O | O | O | O | O | O |

(continued)

| No. | | PS | PS-H | SMA | SMA-H | MS200 | MS200-H | MS750 | MS750-H | SBC | SBC-H |
|---|---|---|---|---|---|---|---|---|---|---|---|
| | **Table 3: Solvents used to obtain HSP value of each resin** | | | | | | | | | | |
| 15 | Ethyl acetate | O | O | O | O | O | O | O | O | O | O |
| 16 | MEK | O | O | O | O | O | O | O | O | O | O |
| 17 | MIBK | O | O | O | O | O | O | O | O | O | O |
| 18 | N-methyl-2-pyrrolidone | O | O | O | O | O | O | O | O | | |
| 19 | Dichloromethane | O | O | O | O | O | O | O | O | | |
| 20 | Decalin | O | O | O | O | O | O | O | O | | |
| 21 | Styrene | O | O | O | O | O | O | | | | |
| 22 | Ethylene dichloride | O | O | O | O | O | O | O | O | | |
| 23 | IBM | O | O | O | O | O | O | O | O | O | O |
| 24 | Toluene | O | O | O | O | O | O | O | O | O | O |
| 25 | m-Xylene | | | O | O | O | O | O | O | O | O |
| 26 | Acetic anhydride | | | O | | | | | | | |
| 27 | Aniline | | | O | | | | | | | |
| 28 | Nitrobenzene | | | O | | O | O | O | O | | |
| 29 | Propylene carbonate | | | O | | | | | | | |
| 30 | Cyclohexanone | | | | | O | O | O | O | | |
| 31 | Cvclohexvlamine | | | O | O | | | | | | |
| 32 | 2-Methyl-1,3-dioxolane | | | O | O | | | | | | |
| 33 | Piperidine | | | O | O | | | | | | |
| 34 | Cyclohexene | | | O | O | | | | | | |

[Table 4]

| | PS | PS-H | SMA | SMA-H | MS200 | MS200-H | MS750 | MS750-H | SBC | SBC-H |
|---|---|---|---|---|---|---|---|---|---|---|
| **Table 4: HSP and HSP value of each resin** | | | | | | | | | | |
| London dispersion force ($\delta d$) | 18.7 | 18.3 | 18.9 | 18.0 | 18.2 | 18.0 | 19.04 | 19.06 | 20.46 | 17.26 |
| Dipole-dipole intermolecular force ($\delta p$) | 7.5 | 0.5 | 8.5 | 2.5 | 8.4 | 2.1 | 3.07 | 3.30 | 3.87 | 1.57 |
| Hydrogen bond force ($\delta h$) | 4.1 | 0.8 | 4.6 | 0.8 | 5.2 | 2.5 | 8.39 | 8.36 | 7.99 | 2.54 |
| HSP value ($\delta$Tot) | 20.6 | 18.3 | 21.2 | 17.6 | 20.7 | 18.1 | 21.0 | 21.1 | 22.3 | 17.8 |
| Radius of Hansen sphere | 8.6 | 3.6 | 8.3 | 4.0 | 8.1 | 5.0 | 9.5 | 9.3 | 11.3 | 3.4 |

Preparation example 11: Preparation of solvent mixture in which resin before and after hydrogenation is dissolved

Eleven levels of solvent or solvent mixture of methyl isobutyrate (IBM) and cyclohexane (CH) were prepared in a weight ratio of IBM:CH = 10:0-0:10 and HSP at each ratio were calculated. The results are shown in Table 5. The HSP at each ratio were determined from the average volume of each solvent. Specifically, $\delta d$ of the 9:1 mixture of IBM and CH was calculated by the following equation after calculating the volume ratio (10.1:1.3) from the relative density of each solvent (IBM: 0.89, CH: 0.778).

$$\delta d = 15.6 \times 10.1/(10.1 + 1.3) + 16.8 \times 1.3/(10.1 + 1.3) \approx 15.7$$

[Table 5] Table 5: HSP of solvent mixture at each ratio

| IBM:CH | 10:0 | 9:1 | 8:2 | 7:3 | 6:4 | 5:5 | 4:6 | 3:7 | 2:8 | 1:9 | 0:10 |
|---|---|---|---|---|---|---|---|---|---|---|---|
| $\delta d$ | 15.6 | 15.7 | 15.9 | 16.0 | 16.1 | 16.2 | 16.4 | 16.5 | 16.6 | 16.7 | 16.8 |
| $\delta p$ | 5.1 | 4.5 | 4.0 | 3.4 | 2.9 | 2.4 | 1.9 | 1.4 | 0.9 | 0.5 | 0 |
| $\delta h$ | 6.1 | 5.4 | 4.8 | 4.2 | 3.5 | 3.0 | 2.4 | 1.8 | 1.3 | 0.7 | 0.2 |

Whether or not a certain solvent falls within the Hansen sphere of a given resin can be determined by whether or not the Hansen solubility parameter (HSP) value (coordinates in a three-dimensional space specified by $\delta d$, $\delta p$ and $\delta h$) of the solvent exists within the Hansen sphere of the resin. Specifically, it can be determined by whether or not the Hansen solubility parameter (HSP) value of the solvent exists within the radius of the Hansen sphere extending from the center coordinates of the Hansen sphere of the resin. The distance between the center coordinates of a Hansen sphere and the coordinates of a certain solvent in a three-dimensional space specified by $\delta d$, $\delta p$ and $\delta h$ can be determined by the following equation.

$$\text{Distance between coordinates} = \sqrt{((\delta d_R - \delta d_s)^2 + (\delta p_R - \delta p_s)^2 + (\delta h_R - \delta h_s)^2)}$$

(in the equation,

$\delta d_R$ represents the $\delta d$ value of the resin, $\delta p_R$ represents the $\delta p$ value of the resin, and $\delta h_R$ represents the $\delta h$ value of the resin, and
$\delta d_s$ represents the $\delta d$ value of the solvent, $\delta p_s$ represents the $\delta p$ value of the solvent, and $\delta h_s$ represents the $\delta h$ value of the solvent).

If the distance between the coordinates obtained by the above equation is smaller than the radius of the Hansen sphere, the Hansen solubility parameter (HSP) value (coordinates in a three-dimensional space identified by $\delta d$, $\delta p$ and $\delta h$) of the solvent is considered to exist within the Hansen sphere of the resin. The values of the distance between the coordinates of the respective solvent mixtures of methyl isobutyrate and cyclohexane and those of each resin in the Hansen space using the above equation are shown in Table 6 below. In the table, the areas surrounded by bold frames indicate the range where the distance between the coordinates in the Hansen space was smaller than the radius of the Hansen sphere both before and after the hydrogenation.

[Table 6] Table 6: Distance between coordinates of solvent mixture of methyl isobutyrate and cyclohexane and those of each resin in Hansen space

| Resin | PS | PS-H | SMA | SMA-H | MS200 | MS200-H | SBC | SBC-H |
|---|---|---|---|---|---|---|---|---|
| Radius of Hansen sphere | 8.6 | 3.6 | 8.3 | 4.0 | 8.1 | 5.0 | 11.3 | 3.4 |
| Solvent mixture | Distance between coordinates in Hansen space | | | | | | | |
| IBM:CH = 10:0 | 4.38 | 7.52 | 4.94 | 6.37 | 4.32 | 5.26 | 5.36 | 5.28 |
| IBM:CH = 9:1 | 4.39 | 6.66 | 5.12 | 5.55 | 4.63 | 4.44 | 5.44 | 4.42 |
| IBM:CH = 8:2 | 4.56 | 5.83 | 5.44 | 4.76 | 5.07 | 3.67 | 5.65 | 3.59 |
| IBM:CH = 7:3 | 4.88 | 5.04 | 5.85 | 4.03 | 5.59 | 2.96 | 5.97 | 2.80 |
| IBM:CH = 6:4 | 5.30 | 4.29 | 6.33 | 3.37 | 6.16 | 2.36 | 6.37 | 2.07 |
| IBM:CH = 5:5 | 5.78 | 3.58 | 6.86 | 2.81 | 6.77 | 1.94 | 6.83 | 1.46 |
| IBM:CH = 4:6 | 6.32 | 2.94 | 7.42 | 2.39 | 7.39 | 1.79 | 7.34 | 1.12 |

(continued)

| Resin | PS | PS-H | SMA | SMA-H | MS200 | MS200-H | SBC | SBC-H |
|---|---|---|---|---|---|---|---|---|
| Radius of Hansen sphere | 8.6 | 3.6 | 8.3 | 4.0 | 8.1 | 5.0 | 11.3 | 3.4 |
| Solvent mixture | Distance between coordinates in Hansen space | | | | | | | |
| IBM:CH = 3:7 | 6.88 | 2.39 | 8.00 | 2.18 | 8.02 | 1.95 | 7.87 | 1.24 |
| IBM:CH = 2:8 | 7.47 | 1.98 | 8.59 | 2.21 | 8.66 | 2.34 | 8.43 | 1.70 |
| IBM:CH = 1:9 | 8.06 | 1.80 | 9.18 | 2.46 | 9.29 | 2.85 | 8.99 | 2.29 |
| IBM:CH = 0:10 | | 8.65 | | 1.88 | | 9.78 | 2.87 | 9.92 | 3.42 | 9.56 | 2.92 |

From the above table, it can be understood that by using a solvent mixture of methyl isobutyrate and cyclohexane in a weight ratio of IBM:CH = 5:5-1:9 for the hydrogenation of polystyrene (PS, Resin 1), the reaction can be completed without causing resin precipitation before and after the hydrogenation. Based on this information, hydrogenation reactions were carried out using solvent mixtures in the following examples.

Example 1

0.5 parts of polystyrene with a weight average molecular weight of 200,000 (Resin 1) (GPPS HF-77 provided by PS Japan Corporation) was dissolved in 2.75 parts of methyl isobutyrate (provided by Tokyo Chemical Industry Co., Ltd., hereinafter referred to as IBM) (relative density: 0.89, $\delta$d: 15.6, $\delta$p: 5.1, $\delta$h: 6.1), and then the water content in the polymer solution was reduced by a distillation process (0.5 parts was distilled off by azeotropic distillation). To the distilled and dehydrated polymer solution, 2.25 parts of Swaclean 150 (a C9/C10 alkylcyclohexane mixture provided by Maruzen Petrochemical Co., Ltd, hereinafter referred to as SWC) (relative density: 0.79, $\delta$d: 15.6, $\delta$p: 0.1, $\delta$h: 0.1) was added to prepare a polymer solution as a feedstock for hydrogenation reaction. The HSP of SWC were estimate values based on the HSP of trimethylcyclohexane and tetramethylcyclohexane. The feedstock polymer solution was fed into a reaction vessel equipped with a stirrer together with 0.10 parts of 5.0 wt% $Pd/ZrO_2$, and the hydrogenation reaction was carried out for 24 hours under the conditions of a hydrogen pressure of 9 MPa and a temperature of 180°C. After the reaction, the catalyst was removed by a filtration process while still in the hydrogen atmosphere, and IBM/SWC was heated and distilled to concentrate the reaction solution to a polymer concentration of 43 wt%. The concentrated solution was introduced into a devolatilization extruder equipped with a vent port in a nitrogen atmosphere to devolatilize the volatile matter and the strands were cut into pellets. The aromatic hydrogenation rate of the aromatic-hydrogenated polymer was 99.5%, the weight average molecular weight Mw was 140,000, and Tgm was 136°C.

Example 2

0.5 parts of Resin 1 was dissolved in 2.75 parts of IBM, and then the water content in the polymer solution was reduced by a distillation process (0.5 parts was distilled off by azeotropic distillation). To the distilled and dehydrated polymer solution, 2.25 parts of cyclohexane (provided by Tokyo Chemical Industry Co., Ltd., hereinafter referred to as CH) (relative density: 0.78, $\delta$d: 16.8, $\delta$p: 0, $\delta$h: 0.2) was added to prepare a polymer solution as a feedstock for hydrogenation reaction. The resulting polymer solution as the feedstock for hydrogenation reaction was subjected to hydrogenation reaction for 10 hours under the same conditions as in Example 1. After the hydrogenation reaction, the catalyst was removed from the polymer solution by filtration and then the reaction solution was dropped into excess isopropanol to precipitate the resin. The resulting resin powder was dried under reduced pressure to obtain dried resin powder. The aromatic hydrogenation rate of the obtained resin was 99.7%, the weight average molecular weight was 154,000, and Tgm was 136°C.

Example 3

A polymer solution as a feedstock for hydrogenation reaction was prepared by the same procedure as in Example 2. The hydrogenation reaction was carried out for 24 hours under the same conditions as in Example 1 except that the obtained feedstock polymer solution was fed into a reaction vessel equipped with a stirrer together with 0.05 parts of 5.0 wt% $Pd/ZrO_2$. The aromatic hydrogenation rate of the obtained resin was 98.9%, the weight average molecular weight was 153,000, and Tgm was 136°C.

Example 4

0.5 parts of Resin 1 was dissolved in 2.75 parts of butyl acetate (relative density: 0.88, $\delta$d: 15.8, $\delta$p: 5.1, $\delta$h: 6.1), and then the water content in the polymer solution was reduced by a distillation process (0.5 parts was distilled off by azeotropic distillation). Hydrogenation reaction was carried out for 24 hours under the same conditions as in Example 2 except that 2.25 parts of Swaclean 150 was added to the distilled and dehydrated polymer solution. The aromatic hydrogenation rate of the obtained resin was 98.8%, the weight average molecular weight was 153,000, and Tgm was 136°C.

Example 5

0.5 parts of Resin 1 was dissolved in 1.85 parts of methyl propionate (relative density: 0.92, $\delta$d: 15.5, $\delta$p: 6.5, $\delta$h: 7.7), and then the water content in the polymer solution was reduced by a distillation process (0.5 parts was distilled off by azeotropic distillation). Hydrogenation reaction was carried out in the same manner as in Example 4 except that 3.15 parts of Swaclean 150 was added to the distilled and dehydrated polymer solution. The aromatic hydrogenation rate of the obtained resin was 98.9%, the weight average molecular weight was 153,000, and Tgm was 136°C.

Example 6

Hydrogenation reaction was carried out for 24 hours under the same conditions as in Example 2 except that 0.5 parts of Resin 1 was replaced with 0.5 parts of Resin 3. The aromatic hydrogenation rate of the obtained resin was 97.8%, the weight average molecular weight was 142,000, and Tgm was 140°C.

Example 7

Hydrogenation reaction was carried out in the same manner as in Example 6 except that 0.5 parts of Resin 3 was dissolved in 2.75 parts of butyl acetate. The aromatic hydrogenation rate of the obtained resin was 97.8%, the weight average molecular weight was 142,000, and Tgm was 139°C.

Example 8

0.5 parts of Resin 5 was dissolved in 4.10 parts of IBM, and then the water content in the polymer solution was reduced by a distillation process (0.5 parts was distilled off by azeotropic distillation). Hydrogenation reaction was carried out for 24 hours under the same conditions as in Example 2 except that 0.81 parts of CH was added to the distilled and dehydrated polymer solution. The aromatic hydrogenation rate of the obtained resin was 99.7%, the weight average molecular weight was 202,000, and Tgm was 131°C.

Example 9

Hydrogenation reaction was carried out for 24 hours under the same conditions as in Example 2 except that 0.5 parts of Resin 1 was replaced with 0.5 parts of Resin 9. The aromatic hydrogenation rate of the obtained resin was 99.8%, the weight average molecular weight was 104,000, and Tgm was 142°C.

Example 10

0.5 parts of Resin 9 was dissolved in 3.65 parts of IBM, and then the water content in the polymer solution was reduced by a distillation process (0.5 parts was distilled off by azeotropic distillation). Hydrogenation reaction was carried out in the same manner as in Example 8 except that 1.35 parts of CH was added to the distilled and dehydrated polymer solution. The aromatic hydrogenation rate of the obtained resin was 99.7%, the weight average molecular weight was 104,000, and Tgm was 142°C.

Example 11

0.5 parts of Resin 9 was dissolved in 2.75 parts of IBM, and then the water content in the polymer solution was reduced by a distillation process (0.5 parts was distilled off by azeotropic distillation). Hydrogenation reaction was carried out in the same manner as in Example 1 except that 2.25 parts of CH was added to the distilled and dehydrated polymer solution. After the reaction, in the same manner as in Example 1, the catalyst was removed, concentration was carried out, the concentrated solution was introduced into a devolatilization extruder equipped with a vent port in a nitrogen atmosphere to devolatilize the volatile matter, and the strands were cut into pellets. The aromatic hydrogenation rate of the obtained resin was 98.5%, the weight average molecular weight was 104,000, and Tgm was 142°C.

Example 12

0.5 parts of a styrene-maleic anhydride copolymer (SMA) resin with a weight average molecular weight of 140,000 (Resin 11) (XIBOND 140 provided by POLYSCOPE POLYMERS B.V., styrene/maleic anhydride molar ratio = 85/15) was dissolved in 3.65 parts of butyl acetate, and then the water content in the polymer solution was reduced by a distillation process (0.5 parts was distilled off by azeotropic distillation). Hydrogenation reaction was carried out for 24 hours under the same conditions as in Example 2 except that 1.35 parts of Swaclean 150 was added to the distilled and dehydrated polymer solution. The aromatic hydrogenation rate of the obtained resin was 98.4%, the weight average molecular weight was 120,000, and Tgm was 149°C. The HSP of Resin 11 before the hydrogenation were $\delta d$: 19.3, $\delta p$: 5.2, and $\delta h$: 3.5, respectively, while the HSP of Resin 11 after the hydrogenation were $\delta d$: 18.3, $\delta p$: 4.4, and $\delta h$: 1.6, respectively. In addition, the radius of the Hansen sphere of Resin 11 before the hydrogenation was 8.5, while the radius of the Hansen sphere of Resin 11 after the hydrogenation was 4.1.

Example 13

0.5 parts of Resin 11 was dissolved in 3.65 parts of butyl acetate, and then the water content in the polymer solution was reduced by a distillation process (0.5 parts was distilled off by azeotropic distillation). Hydrogenation reaction was carried out in the same manner as in Example 11 except that 1.35 parts of CH was added to the distilled and dehydrated polymer solution. The aromatic hydrogenation rate of the obtained resin was 98.5%, the weight average molecular weight was 120,000, and Tgm was 149°C.

Comparative example 1

0.5 parts of polystyrene with a weight average molecular weight of 200,000 (Resin 1) (GPPS HF-77 provided by PS Japan Corporation) was dissolved in 5.0 parts of IBM, and then the water content in the polymer solution was reduced by a distillation process (0.5 parts was distilled off by azeotropic distillation). The resulting distilled and dehydrated polymer solution as the feedstock for hydrogenation reaction was subjected to hydrogenation reaction under the same conditions as in Example 1. When the reaction vessel after the reaction was opened and checked after the reaction vessel had been made safe, the hydrogenated polymer was found to be precipitated in the IBM solvent and was difficult to separate from the catalyst. The aromatic hydrogenation rate of the obtained resin was 97.5%.

Comparative example 2

Hydrogenation reaction was carried out for 16 hours under the same conditions as in Comparative example 1 except that 0.5 parts of Resin 1 was dissolved in 5.0 parts of CH. When the reaction vessel after the reaction was opened and checked after the reaction vessel had been made safe, a hydrogenated polymer was found to be precipitated in the solvent and was difficult to separate from the catalyst. The aromatic hydrogenation rate of the obtained resin was 98.3%.

Comparative example 3

Hydrogenation reaction was carried out in the same manner as in Comparative example 1 except that 0.5 parts of Resin 3 was dissolved in 5.0 parts of methyl propionate. When the reaction vessel after the reaction was opened and checked after the reaction vessel had been made safe, the hydrogenated polymer was found to be precipitated in the methyl propionate solvent and was difficult to separate from the catalyst. The aromatic hydrogenation rate of the obtained resin was 14.2%.

Comparative example 4

Hydrogenation reaction was carried out in the same manner as in Comparative example 1 except that 0.5 parts of Resin 5 was dissolved in 5.0 parts of IBM. When the reaction vessel after the reaction was opened and checked after the reaction vessel had been made safe, the hydrogenated polymer was found to be precipitated in the IBM solvent and was difficult to separate from the catalyst. The aromatic hydrogenation rate of the obtained resin was 99.6%.

Comparative example 5

Hydrogenation reaction was carried out in the same manner as in Comparative example 1 except that 0.5 parts of Resin 11 was dissolved in 5.0 parts of IBM. When the reaction vessel after the reaction was opened and checked after the reaction vessel had been made safe, the hydrogenated polymer was found to be precipitated in the IBM solvent and was difficult to separate from the catalyst. The aromatic hydrogenation rate of the obtained resin was 93.8%.

Reference example 1

0.5 parts of polystyrene with a weight average molecular weight of 200,000 (Resin 1) (GPPS HF-77 provided by PS Japan Corporation) was dissolved in 5.0 parts of cyclohexane, and then the water content in the polymer solution was reduced by a distillation process (0.5 parts was distilled off by azeotropic distillation). The resulting distilled and dehydrated polymer solution as the feedstock for hydrogenation reaction was subjected to hydrogenation reaction under the same conditions as in Example 1. The aromatic hydrogenation rate of the obtained resin was 99.7%. However, since cyclohexane (ignition point: 268°C) alone was used as the solvent, volatile matter was not devolatilized by the devolatilization extruder.

Reference example 2

0.5 parts of Resin 3 was dissolved in 5.0 parts of cyclohexane, and then the water content in the polymer solution was reduced by a distillation process (0.5 parts was distilled off by azeotropic distillation). The resulting distilled and dehydrated polymer solution as the feedstock for hydrogenation reaction was subjected to hydrogenation reaction for 63 hours under the same conditions as in Example 1. After the hydrogenation reaction, the catalyst was removed from the polymer solution by filtration and then the reaction solution was dropped into excess isopropanol to precipitate the resin. The resulting resin powder was dried under reduced pressure to obtain dried resin powder. The aromatic hydrogenation rate of the obtained resin was 98.0%.

[Table 7] Table 7

| | Unit | Example 1 | Example 2 | Example 3 | Example 4 | Example 5 | Example 6 | Example 7 |
|---|---|---|---|---|---|---|---|---|
| Resin 1 | Parts by weight | 0.5 | 0.5 | 0.5 | 0.5 | 0.5 | | |
| Resin 3 | Parts by weight | | | | | | 0.5 | 0.5 |
| IBM | Parts by weight | 2.75 | 2.75 | 2.75 | | | 2.75 | |
| Butyl acetate | Parts by weight | | | | 2.75 | | | 2.75 |
| Methyl propionate | Parts by weight | | | | | 1.85 | | |
| SWC | Parts by weight | 2.25 | | | 2.25 | 3.15 | | |
| CH | Parts by weight | | 2.25 | 2.25 | | | 2.25 | 2.25 |
| Catalyst | Parts by weight | 0.1 | 0.1 | 0.05 | 0.1 | 0.1 | 0.1 | 0.1 |
| Reaction time | Time | 24 | 10 | 24 | 24 | 24 | 24 | 24 |
| Reaction temperature | °C | 180 | 180 | 180 | 180 | 180 | 180 | 180 |
| Hydrogenation rate | % | 99.5 | 99.7 | 98.9 | 98.8 | 98.9 | 97.8 | 97.8 |
| Purification method | | Devolatilization extrusion | Reprecipitation | Reprecipitation | Reprecipitation | Reprecipitation | Reprecipitation | Reprecipitation |
| Note: Of the IBM, butyl acetate and methyl propionate added, 0.5 wt% each was distilled off by azeotropic distillation. | | | | | | | | |

[Table 8] Table 8

| | Unit | Example 8 | Example 9 | Example 10 | Example 11 | Example 12 | Example 13 |
|---|---|---|---|---|---|---|---|
| Resin 5 | Parts by weight | 0.5 | | | | | |
| Resin 9 | Parts by weight | | 0.5 | 0.5 | 0.5 | | |
| Resin 11 | Parts by weight | | | | | 0.5 | 0.5 |
| IBM | Parts by weight | 4.10 | 2.75 | 3.65 | 2.75 | | |
| Butyl acetate | Parts by weight | | | | | 3.65 | 3.65 |
| SWC | Parts by weight | | | | | 1.35 | |
| CH | Parts by weight | 0.81 | 2.25 | 1.35 | 2.25 | | 1.35 |
| Catalyst | Parts by weight | 0.1 | 0.1 | 0.1 | 0.1 | 0.1 | 0.1 |
| Reaction time | Time | 24 | 24 | 24 | 24 | 24 | 24 |
| Reaction temperature | °C | 180 | 180 | 180 | 180 | 180 | 180 |
| Hydrogenation rate | % | 99.7 | 99.8 | 99.7 | 98.5 | 98.4 | 98.5 |
| Purification method | | Reprecipitation | Reprecipitation | Reprecipitation | Devolatilization extrusion | Reprecipitation | Reprecipitation |
| Note: Of the IBM and butyl acetate added, 0.5 wt% each was distilled off by azeotropic distillation. | | | | | | | |

[Table 9] Table 9

| | | Comparative example 1 | Comparative example 2 | Comparative example 3 | Comparative example 4 | Comparative example 5 | Reference example 1 | Reference example 2 |
|---|---|---|---|---|---|---|---|---|
| Resin 1 | Parts by weight | 0.5 | 0.5 | | | | 0.5 | |
| Resin 3 | Parts by weight | | | 0.5 | | | | 0.5 |
| Resin 5 | Parts by weight | | | | 0.5 | | | |
| Resin 11 | Parts by weight | | | | | 0.5 | | |
| IBM | Parts by weight | 5.0 | | | 5.0 | 5.0 | | |
| Methyl propionate | Parts by weight | | | 5.0 | | | | |
| CH | Parts by weight | | 5.0 | | | | 5.0 | 5.0 |
| Catalyst | Parts by weight | 0.1 | 0.1 | 0.1 | 0.1 | 0.1 | 0.1 | 0.1 |
| Reaction time | Time | 24 | 16 | 24 | 24 | 24 | 24 | 63 |
| Reaction temperature | °C | 180 | 180 | 180 | 180 | 180 | 180 | 180 |
| Hydrogenation rate | % | 97.5 | 98.3 | 14.2 | 99.6 | 93.8 | 99.7 | 98.0 |
| Note: Of the solvents added in the comparative and reference examples, 0.5 wt% each was distilled off by azeotropic distillation. | | | | | | | | |

**Claims**

1. A method for producing a hydrogenated polymer by hydrogenating an aromatic ring of an aromatic vinyl compound-based polymer, the method comprising performing hydrogenation reaction using the aromatic vinyl compound-based polymer, a solvent, and a hydrogenation catalyst,

   wherein the solvent is a solvent mixture containing at least one type of first solvent and at least one type of second solvent, and
   wherein Hansen solubility parameter (HSP) value of the solvent mixture:

   1) falls within a Hansen sphere in a three-dimensional space consisting of $\delta d$, $\delta p$, and $\delta h$ axes of the aromatic vinyl compound-based polymer before the hydrogenation; and
   2) falls within a Hansen sphere in a three-dimensional space consisting of $\delta d$, $\delta p$, and $\delta h$ axes of the aromatic vinyl compound-based polymer after the hydrogenation.

2. A method for producing a hydrogenated polymer by hydrogenating an aromatic ring of an aromatic vinyl compound-based polymer, the method comprising performing hydrogenation reaction using the aromatic vinyl compound-based polymer, a solvent, and a hydrogenation catalyst,

   wherein the solvent is a solvent mixture containing at least one type of first solvent and at least one type of second solvent,
   wherein Hansen solubility parameters (HSP) of the at least one type of first solvent are each as follows:

   $\delta d$: 10-20;
   $\delta p$: 1-15; and
   $\delta h$: 1-25,

   wherein HSP of the at least one type of second solvent are each as follows:

   $\delta d$: 10-20;
   $\delta p$: 0 to less than 1; and
   $\delta h$: 0-2,

   wherein the weight ratio of the at least one type of first solvent to the at least one type of second solvent (first:second ratio) is 1:9-9:1, and
   wherein the first solvent is a solvent selected from the group consisting of an ester solvent, an aromatic solvent, a monocyclic monoterpene, and a dioxane.

3. The method according to claim 1, wherein a weight ratio of the at least one type of first solvent to the at least one type of second solvent (first:second ratio) is 1:9-9:1.

4. The method according to claim 1 or 3, further comprising obtaining a Hansen sphere of the aromatic vinyl compound-based polymer before the hydrogenation and a Hansen sphere of the aromatic vinyl compound-based polymer after the hydrogenation.

5. The method according to any one of claims 1-4, wherein HSP of the solvent mixture are each as follows:

   $\delta d$: 15.6-16.7;
   $\delta p$: 0.3-4.7; and
   $\delta h$: 0.5-5.8.

6. The method according to any one of claims 1-5, wherein the at least one type of first solvent comprises one or more selected from the group consisting of methyl acetate, ethyl acetate, butyl acetate, methyl isobutyrate, methyl propionate, and propylene glycol monomethyl ether acetate.

7. The method according to any one of claims 1-6, wherein the at least one type of second solvent comprises one or more selected from the group consisting of a saturated hydrocarbon solvent and a hydrogenated product of monocyclic monoterpene.

8. The method according to any one of claims 1-7, wherein the at least one type of second solvent comprises one or more selected from the group consisting of cyclohexane, a C7-C15 monoalkylcyclohexane, a C8-C15 dialkylcyclohexane, a C9-C15 trialkylcyclohexane, a C10-C15 tetraalkylcyclohexane, cyclooctane, a C9-C15 monoalkylcyclooctane, a C10-C15 dialkylcyclooctane, a C11-C15 trialkylcyclooctane, a C12-C15 tetraalkylcyclooctane, n-octane, and n-decane.

9. The method according to any one of claims 1-7, wherein the at least one type of second solvent comprises a C9 alkylcyclohexane and/or a C10 alkylcyclohexane.

10. The method according to any one of claims 1-9, wherein the first solvent has a boiling point of 50°C or higher and an ignition point of 400°C or higher.

11. The method according to any one of claims 1-10, wherein the second solvent has a boiling point of 80°C or higher and an ignition point of 230°C or higher.

12. The method according to any one of claims 1-11, wherein the aromatic vinyl compound-based polymer comprises one or more selected from the group consisting of a copolymer of styrene and butadiene, a copolymer of styrene and isoprene, a copolymer of styrene and methyl methacrylate, a copolymer of styrene and maleic anhydride, a copolymer of styrene and vinyl acetate, and polystyrene.

13. The method according to any one of claims 1-12, comprising forming a polymeric resin by devolatilization extrusion after the hydrogenation reaction.

14. The method according to any one of claims 1-13, further comprising a concentration step between the hydrogenation reaction and the devolatilization extrusion.

15. The method according to any one of claims 1-14, wherein the hydrogenation catalyst is a solid catalyst loaded with one or more selected from the group consisting of palladium, platinum, ruthenium, rhodium, and nickel.

# INTERNATIONAL SEARCH REPORT

| International application No. |
|---|
| **PCT/JP2023/014477** |

**A. CLASSIFICATION OF SUBJECT MATTER**

*C08F 8/04*(2006.01)i; *C08F 12/08*(2006.01)i
FI:   C08F8/04; C08F12/08

According to International Patent Classification (IPC) or to both national classification and IPC

**B. FIELDS SEARCHED**

Minimum documentation searched (classification system followed by classification symbols)

C08F8/04; C08F12/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2006-291184 A (MITSUBISHI GAS CHEM CO INC) 26 October 2006 (2006-10-26) <br> claims, examples | 1, 4, 6-8, 10-12, 15 |
| X | WO 2001/082298 A1 (TEIJIN LIMITED) 01 November 2001 (2001-11-01) <br> claims, p. 12, lines 20-22, examples | 1-5, 7-9, 11-12, 15 |
| Y | | 13-15 |
| Y | WO 2009/020096 A1 (MITSUBISHI GAS CHEM CO INC) 12 February 2009 (2009-02-12) <br> paragraph [0034] | 13-15 |
| X | JP 2003-242836 A (NIPPON ZEON CO LTD) 29 August 2003 (2003-08-29) <br> claims, paragraph [0021], examples | 1-4, 7-9, 11-12, 15 |
| Y | | 13-15 |
| A | JP 2015-113367 A (TOYOTA MOTOR CORP) 22 June 2015 (2015-06-22) <br> paragraph [0056] | 1-15 |

☑ Further documents are listed in the continuation of Box C.        ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 June 2023** | **27 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

International application No.

**PCT/JP2023/014477**

### C. DOCUMENTS CONSIDERED TO BE RELEVANT

| Category* | Citation of document, with indication, where appropriate, of the relevant passages | Relevant to claim No. |
|---|---|---|
| A | CN 111085268 A (CHINA PETROLEUM & CHEMICAL CORPORATION) 01 May 2020 (2020-05-01) <br> claims, examples | 1-15 |
| A | JP 04-106107 A (MITSUBISHI KASEI CORP) 08 April 1992 (1992-04-08) <br> claims, examples (in particular, examples 1-4, comparative example 2) | 1-15 |

Form PCT/ISA/210 (second sheet) (January 2015)

## INTERNATIONAL SEARCH REPORT

| International application No. |
|---|
| **PCT/JP2023/014477** |

**Box No. III      Observations where unity of invention is lacking (Continuation of item 3 of first sheet)**

This International Searching Authority found multiple inventions in this international application, as follows:

(Invention 1) Claim 1, and claims 3-15 referring to claim 1
     Claim 1 and claims 3-8 referring to claim 1 lack novelty in light of any of document 1 (JP 2006-291184 A), document 2 (WO 2001/082298 A1), or document 4 (JP 2003-242836 A), and thus do not have a special technical feature. However, claim 9 referring to claim 1 has the special technical feature of a "manufacturing method ··· set forth in claim 1, wherein the at least one second solvent contains C9 alkylcyclohexane and/or C10 alkylcyclohexane." Also, claims 10-15 referring to claim 1 have the same technical feature as claim 9 referring to claim 1. Therefore, claim 1 and claims 3-15 referring to claim 1 are classified as invention 1.

(Invention 2) Claim 2 and claims 5-15 referring to claim 2
     It cannot be said that claim 2 has a special technical feature identical or corresponding to that of claim 9 classified as invention 1.
     Also, claim 2 is not substantially identical to or similarly closely related to any of the claims classified as invention 1.
     Therefore, claim 2 cannot be classified as invention 1.
     In addition, claim 2 and claims 5-15 referring to claim 2 have the technical feature of a "method of producing hydrogenated polymers by hydrogenating an aromatic ring of an aromatic vinyl compound polymer, the method including the step of performing a hydrogenation reaction using the aromatic vinyl compound-based polymer, a solvent, and a hydrogenation catalyst, wherein: the solvent is a mixed solvent containing at least one first solvent and at least one second solvent; Hansen's solubility parameter (HSP) of the at least one first solvent is as follows, respectively; the HSP of the at least one second solvent ··· is as follows, respectively; the weight ratio (first: second) of the at least one first solvent to the at least one second solvent ··· is 1:9 to 9:1; and the first solvent is a solvent selected from the group consisting of ester solvents, aromatic solvents, monocyclic monoterpenes, and dioxanes." (claim 2) and are thus classified as invention 2.

1. [✓]   As all required additional search fees were timely paid by the applicant, this international search report covers all searchable claims.

2. [ ]   As all searchable claims could be searched without effort justifying additional fees, this Authority did not invite payment of additional fees.

3. [ ]   As only some of the required additional search fees were timely paid by the applicant, this international search report covers only those claims for which fees were paid, specifically claims Nos.:

4. [ ]   No required additional search fees were timely paid by the applicant. Consequently, this international search report is restricted to the invention first mentioned in the claims; it is covered by claims Nos.:

**Remark on Protest**   [ ]   The additional search fees were accompanied by the applicant's protest and, where applicable, the payment of a protest fee.

[ ]   The additional search fees were accompanied by the applicant's protest but the applicable protest fee was not paid within the time limit specified in the invitation.

[✓]   No protest accompanied the payment of additional search fees.

Form PCT/ISA/210 (continuation of first sheet) (January 2015)

INTERNATIONAL SEARCH REPORT
Information on patent family members

International application No.

**PCT/JP2023/014477**

| Patent document cited in search report | | | Publication date (day/month/year) | Patent family member(s) | | | Publication date (day/month/year) |
|---|---|---|---|---|---|---|---|
| JP | 2006-291184 | A | 26 October 2006 | US 2006/0205886 A1 claims, examples EP 1702934 A1 | | | |
| WO | 2001/082298 | A1 | 01 November 2001 | US 2003/0170564 A1 claims, paragraph [0052], examples EP 1291858 A1 | | | |
| WO | 2009/020096 | A1 | 12 February 2009 | US 2011/0269912 A1 paragraph [0076] EP 2177541 A1 CN 101754986 A KR 10-2010-0042260 A | | | |
| JP | 2003-242836 | A | 29 August 2003 | (Family: none) | | | |
| JP | 2015-113367 | A | 22 June 2015 | (Family: none) | | | |
| CN | 111085268 | A | 01 May 2020 | (Family: none) | | | |
| JP | 04-106107 | A | 08 April 1992 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5540703 B
- JP 2014077044 A
- JP 2890748 B
- JP 2001527095 W
- JP 2002511501 W
- JP 2002511508 W
- JP 4224655 B
- JP 5007688 B